(19) 

(11) **EP 4 289 783 B1**

(12) **EUROPEAN PATENT SPECIFICATION**

(45) Date of publication and mention of the grant of the patent:
**26.08.2026 Bulletin 2026/35**

(21) Application number: **22749558.7**

(22) Date of filing: **25.01.2022**

(51) International Patent Classification (IPC):
***C01B 6/21*** *(2006.01)*

(52) Cooperative Patent Classification (CPC):
**C01B 6/21**

(86) International application number:
**PCT/JP2022/002731**

(87) International publication number:
**WO 2022/168684 (11.08.2022 Gazette 2022/32)**

(54) **METHOD FOR PRODUCING SODIUM BOROHYDRIDE**

VERFAHREN ZUR HERSTELLUNG VON NATRIUMBORHYDRID

MÉTHODE DE PRODUCTION DE BOROHYDRURE DE SODIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2021 JP 2021017828**

(43) Date of publication of application:
**13.12.2023 Bulletin 2023/50**

(73) Proprietor: **Nippon Light Metal Company, Ltd.**
**Tokyo 105-8681 (JP)**

(72) Inventors:
- **SUGITA, Kaoru**
**Shizuoka-shi, Shizuoka 421-3291 (JP)**
- **OOTA, Yuji**
**Shizuoka-shi, Shizuoka 421-3291 (JP)**
- **ABE, Rene Yo**
**Shizuoka-shi, Shizuoka 421-3291 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 156 364**
**WO-A1-2015/190403**
**WO-A1-2021/025068**
**JP-A- 2019 189 483**
**JP-B1- 5 839 337**
**US-A- 3 505 035**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

**Description**

Field

The present invention relates to a method for producing sodium borohydride, more specifically to a method for producing sodium borohydride from sodium metaborate. Background

While a hydrogen fuel receives an attention as the alternative fuel of a fossil fuel, sodium borohydride (SBH) is a promising hydrogen carrier in storage, transportation, and generation of hydrogen. In order to propagate sodium borohydride as the hydrogen carrier in a society, it is indispensable to establish the best production method thereof with keeping a mass production technology in mind.

A known example of the production method of sodium borohydride is, for example, as disclosed in Patent Literature 1, the method in which a trialkyl borate and sodium aluminum hydride are caused to react to give sodium borohydride.

In Patent Literature 2, the method of producing sodium borohydride is disclosed, including the process at which sodium metaborate and aluminum particles are caused to react with crushing and rolling them by using a stirring medium to obtain sodium borohydride.

In Patent Literature 3, the method of producing sodium borohydride is disclosed in which at the time of producing sodium borohydride, rolling and crushing are carried out in a tightly sealed vessel by using a ceramic ball as the crushing medium.

Non Patent Literature 1 discloses the method for producing sodium borohydride in which sodium diborate ($Na_4B_2O_5$) and sodium oxide ($Na_2O$) are caused to react with aluminum and hydrogen under the molten state thereof at high temperature (855 K (581°C), preferably 873 K (599°C)) to obtain sodium borohydride.

Citation List

Patent Literature

Patent Literature 1: Japanese Patent No. 2809666
Patent Literature 2: International Patent Application Laid-open No. 2015/190403
Patent Literature 3: Japanese Patent Application Laid-open No. 2019-189483

Non Patent Literature

Non Patent Literature 1: Bin Hong LIU and 4 researchers, "Sodium Borohydride Synthesis by Reaction of Na2O Contained Sodium Borate with Al and Hydrogen", Energy & Fuels, 2007, Vol. 21, No. 3, pp. 1707-1711

Summary

Technical Problem

However, in the proposal of Patent Literature 1, there is a problem in that the production process thereof is cumbersome because it is necessary that in advance boric acid is converted to a trialkyl borate, and then, this is caused to react with sodium, aluminum, and hydrogen to form sodium aluminum hydride.

In the proposal of Patent Literature 2, sodium borohydride is produced by the method in which dried anhydrous sodium metaborate ($NaBO_2$) and aluminum particles having the diameter of about 3 mm are charged into the reaction portion that is rotatably arranged in a cylindrical reaction vessel, and then, they are rolled and crushed in the reaction vessel by using a stirring medium (steel balls having the diameter of about 30 mm) to obtain sodium borohydride. In this method, however, there is a problem in that when the rolling and crushing is carried out for a long period of time, the aluminum particles to be crushed become so small that it is difficult to crush the particles, thereby causing the reaction not to progress any further.

In the proposal by Patent Literature 3, because the ceramic balls are used as the crushing medium in the tightly sealed vessel at the time of producing sodium borohydride, the reaction product becomes the state of a high density by the rolling and crushing while the ceramic balls continue to crush the product; as a result, when the size and the shape of the aluminum particles reaches the point at which they are too small to be crushed by the rolling and crushing, the new surface that is necessary for the reaction cannot be generated so that the reaction cannot proceed any further, resulting in the decrease in the reaction yield.

In the proposal by Non Patent Literature 1, sodium hydroxide is added to sodium metaborate, which is followed by heating to obtain an aqueous solution thereof; then, after sodium diborate ($Na_4B_2O_5$) containing sodium oxide ($Na_2O$), which is synthesized by thermal dehydration, or sodium metaborate is prepared, this is caused to react under a molten state thereof at a high pressure of 2.3 MPa. To melt the sodium diborate, however, it was necessary to bring the temperature to a high temperature (around 855 K (581°C), preferably around 873 K (599°C)), and that the mole ratio of sodium metaborate to sodium oxide needed to be made 3:2 in order to obtain the reaction yield of so high as 65.8%. When the mole ratio was made low, there is a problem in that the reaction yield is dramatically decreased, resulting in 0% of the reaction yield in sodium metaborate itself under a solid state at the temperature described above.

The present invention was made under the circumstances of the problems described above; and thus, an object of the present invention is to provide the method for producing sodium borohydride with which formation of sodium borohydride can be accomplished by a simple constitution.

Solution to Problem

A method for producing sodium borohydride according to a first embodiment, the method comprising at a time when a sodium borate having a Na/B mole ratio in the range of more than 0.85 to less than 1.47, an aluminum powder, and a fluoride powder are mixed and caused to react in a tightly sealed vessel filled with a hydrogen gas at a temperature of 490°C or higher and 560°C or lower and a hydrogen pressure of 0.5 MPa or more, carrying out stirring using a stirrer in the tightly sealed vessel, wherein a stirring height ratio (X) expressed by a following formula (I) is 75% or more, in which (a) is a minimum clearance between the stirrer and a lowest part of the tightly sealed vessel in a gravity direction, and (b) is a raw material charged height when a raw material is charged into the tightly sealed vessel:

$$X = [(b - a)/b] \times 100 \quad \text{Formula (I).}$$

In the first embodiment, the sodium borate may be one or more selected from sodium metaborate and sodium tetraborate.

In the first embodiment, the fluoride may be one or more selected from sodium fluoride (NaF), sodium hexafluoroaluminate ($Na_3AlF_6$), potassium fluoride (KF), potassium aluminum fluoride ($KAlF_4$), aluminum fluoride ($AlF_3$), and lithium fluoride (LiF).

Further, in the first embodiment, a mole ratio of aluminum in the aluminum powder to boron in the sodium borate may be 4/3 or more.

Further, in the first embodiment, an alkali metal oxide or an alkali earth metal oxide may be further added, and a mole ratio of a total mole amount of an alkali metal and an alkaline earth metal, and an alkali metal and an alkali earth metal that are included in the sodium borate to a mole amount of boron included in the sodium borate is 1.0 or more and 1.4 or less.

Further, in the first embodiment, before the stirring, inside of the tightly sealed vessel may be heated at 280°C or higher and 560°C or lower.

Advantageous Effects of Invention

According to a first embodiment, the method for producing sodium borohydride not using a large production facility can be provided.

Brief Description of Drawings

FIG. 1 is the process chart to produce sodium borohydride (SBH) by using a sodium borate as a raw material.
FIG. 2A is the reaction scheme illustrating the process of the sodium borohydride (SBH) formation reaction.
FIG. 2B is the reaction scheme illustrating the process of the sodium borohydride (SBH) formation reaction.
FIG. 2C is the reaction scheme illustrating the process of the sodium borohydride (SBH) formation reaction.
FIG. 2D is the reaction scheme illustrating the process of the sodium borohydride (SBH) formation reaction.
FIG. 2E is the reaction scheme illustrating the process of the sodium borohydride (SBH) formation reaction.
FIG. 2F is the reaction scheme illustrating the process of the sodium borohydride (SBH) formation reaction.
FIG. 3 is the partial sectional view illustrating one example of the tightly sealed vessel used in this embodiment.

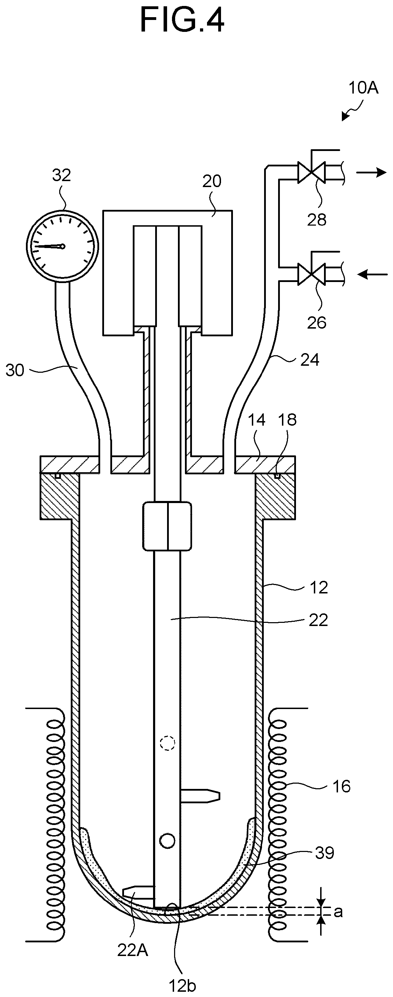

FIG. 4 is the partial sectional view illustrating one example of the tightly sealed vessel used in this embodiment.
FIG. 5 is the partial sectional view illustrating another example of the tightly sealed vessel used in this embodiment.
FIG. 6 is the partial sectional view illustrating another example of the tightly sealed vessel used in this embodiment.

FIG. 7 is the partial sectional view illustrating another example of the tightly sealed vessel used in this embodiment.
FIG. 8 is the partial sectional view illustrating another example of the tightly sealed vessel used in this embodiment.
FIG. 9 is the SEM backscattered electron image of the product when the reaction temperature is 510°C.
FIG. 10 is the SEM backscattered electron image of the product when the reaction temperature is 478°C:
FIG. 11 is the X-ray diffraction analysis chart of the product when the reaction was stopped at the reaction yield of 8.1% immediately after start-up of the reaction that is tested with the same condition as Test Example 18.
FIG. 12A is the SEM mapping photograph of the product when the reaction was stopped at the reaction yield of 8.1% immediately after start-up of the reaction that is tested with the same condition as Test Example 18.
FIG. 12B is the SEM mapping photograph of the product when the reaction was stopped at the reaction yield of 8.1% immediately after start-up of the reaction that is tested with the same condition as Test Example 18.
FIG. 13 is the X-ray diffraction analysis chart of the product at the reaction yield of 91.1% in Test Example 20.
FIG. 14 is the X-ray diffraction analysis chart of the product at the reaction yield of 14.1% in Comparative Example 10, in which NaOH is added.
FIG. 15 is the SEM mapping photograph of the product at the reaction yield of 14.1% in Comparative Example 10, in which NaOH is added.
FIG. 16 is the graph illustrating the relationship between the height ratio ((b-a)/b) and the reaction passage time.
FIG. 17 is the graph illustrating the relationship between the reaction yield (SBH yield) and the reaction passage time.
FIG. 18 is the graph illustrating the production condition of Test Example 22.
FIG. 19 is the graph illustrating the production condition of Test Example 23.
FIG. 20A is the photograph of the outer appearance of the stirring rod equipped with the pin-like stirrer using the tightly sealed vessel (clearance a: 4 mm) illustrated in FIG. 3.
FIG. 20B is the photograph of the product after sodium borohydride is produced by rotating the stirring rod.
FIG. 20C is the photograph of the product that is scraped off from the vessel after completion of stirring for a prescribed period.
FIG. 20D is the photograph that is taken when measuring the thickness of the obtained product.
FIG. 20E is the enlarged photograph of the obtained product.
FIG. 20F is the SEM photograph of the cross section of the product lump at the reaction yield of 91.1%.
FIG. 21A is the photograph of the product after sodium borohydride is produced by rotating the stirring rod using the tightly sealed vessel illustrated in FIG. 3 (clearance a: 5 mm).
FIG. 21B is the enlarged photograph illustrating the state of the product after completion of stirring conducted for a prescribed period.

## Description of Embodiments

### <First Embodiment>

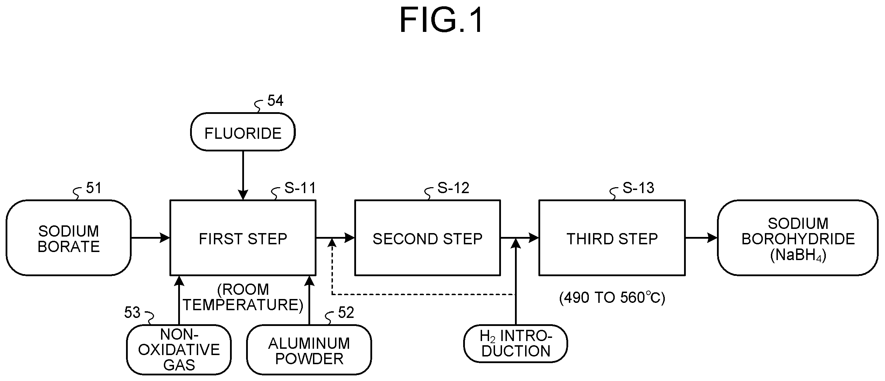

FIG. 1 is the process chart to produce a borohydride (SBH) by using a sodium borate as a raw material.

In the method for producing the sodium borohydride according to a first embodiment, a sodium borate, an aluminum powder, and a fluoride powder are mixed, and then, the resulting mixture is caused to react in a tightly sealed vessel filled with a hydrogen gas at a temperature of 490°C or higher and 560°C or lower. The sodium borate and the aluminum powder are caused to react as they are in the solid phase state. The method for producing the sodium borohydride according to the first embodiment includes, as illustrated in FIG. 1, the steps from a first step (S-11) to a third step (S-13).

Specifically, illustrative examples of the sodium borate 51 as the borate raw material at the first step include borax (sodium tetraborate: $Na_2B_4O_7$), sodium metaborate ($NaBO_2$ (= $Na_2B_2O_4$)), or a mixture of them, but not limited to these.

In this embodiment, a ratio Na/B (mole ratio) in the sodium borate is in the range of more than 0.85 toless than 1.47, and more preferably in the range of more than 1.0 to 1.4 or less, as illustrated in Test Examples to be described later.

Hereinafter, each step will be described in detail. In the steps described below, explanation will be made, as the sodium borate, by using sodium metaborate ($NaBO_2$) that is separated as crystals.

### [First Step]

The first step (S-11) is the step at which after or before charging the sodium metaborate of the sodium borate 51, the particle diameter of the sodium metaborate being 100 μm or less, the aluminum powder 52, and the fluoride 54 into a tightly sealed vessel, a non-oxidative gas 53 is introduced into the tightly sealed vessel to fill the inside thereof with the non-oxidative gas.

The first step is mainly the step at which raw materials are prepared and charged.

At the first step, by filling inside of the tightly sealed vessel with the non-oxidative gas, attachment of moisture in

an air to the sodium borate and to the surface film of the oxidized aluminum can be avoided. The timing to fill the inside of the tightly sealed vessel with the non-oxidative gas may be before or after the raw materials are charged into the tightly sealed vessel.

Here, illustrative examples of the non-oxidative gas 53 include a hydrogen gas and a rare gas (for example, a helium gas and an argon gas). Alternatively, the first step may be the step at which inside of the tightly sealed vessel is brought to a vacuum state before or after the sodium borate having the particle diameter of 100 μm or less and the aluminum are charged into the tightly sealed vessel.

The tightly sealed vessel that can be used here is the vessel that has a heat resistance and a pressure resistance endurable to a high temperature (for example, 560°C) and to a high pressure (for example, 10 MPa), and that can ensure the sealed space to fill the gas.

The vessel that is equipped with at least a stirring means may be used. Details of the tightly sealed vessel like this will be described later.

The sodium borate capable of being the raw material is preferably at least one or more selected from sodium metaborate, sodium tetraborate, and sodium diborate.

Hereinafter, the explanation will be made by using the sodium metaborate powder as one example of the sodium borate.

In this embodiment, the particle diameter of the sodium metaborate powder is 100 μm or less. When the particle diameter of the sodium metaborate powder is more than 100 μm, there is a possibility to cause the decrease in the production efficiency of the sodium borohydride. Here, the sodium metaborate powder is the raw material having passed through the sieve having an opening of 100 μm after this is roughly crushed to fine powers. To further increase the production efficiency of the sodium borohydride, it is preferable to use the sodium metaborate powder having a further smaller particle diameter. For this, the sodium metaborate powder having passed through the sieve having the opening of less than 100 μm (for example, a sieve having the opening of 50 μm or less) may be used.

The mass of the sodium metaborate to be charged at the first step may be determined in accordance with the intended production amount of the sodium borohydride. Note that because the sodium metaborate includes water, it is necessary to estimate somewhat a larger quantity with taking the mass reduction of the water into consideration.

The aluminum that can be used as the raw material may be a powdery material or broken pieces such as a scrap material. The aluminum broken piece that can be used may be scrap materials such as chips and waste materials, but it is preferable to select as low as possible the material containing metal impurities that are less noble than aluminum.

The average particle diameter of the aluminum to be charged is, for example, 1 μm or more, and the maximum particle diameter thereof is preferably 10 mm or less. When the average particle diameter of the aluminum is less than 1 μm, this is prone to cause powder explosion, so that the handling thereof becomes difficult; on top of this, the particles are prone to attach to each other thereby causing agglomeration. When the particle diameter thereof is more than 10 mm, the specific surface area per mass decreases thereby resulting in the decrease in the reaction area, so that the initial reaction rate can dramatically decrease. The average particle diameter is more preferably 5 μm or more and 5 mm or less. The average particle diameter may be obtained as the particle diameter of the sphere-corresponding diameter thereof measured by the laser diffraction type particle diameter distribution measurement instrument.

The raw material fluoride is one or more selected from sodium fluoride (NaF), sodium hexafluoroaluminate ($Na_3AlF_6$), potassium fluoride (KF), potassium aluminum fluoride ($KAlF_4$), aluminum fluoride ($AlF_3$), and lithium fluoride (LiF). Among these, sodium fluoride, which is the fluoride of an alkali metal, is especially preferable.

Here, the fluoride is added in order to enhance the reaction yield of the sodium borohydride and the efficiency of the particle stirring reaction. At the reaction step, as the fluoride, an alkali aluminum fluoride layer is formed with the alkali metal during the course of the reduction reaction of an alkali metal oxide that takes place on the aluminum surface. Because the free energy of formation of sodium fluoride is low and stable, the fluoride layer plays a role to keep the inside of the aluminum particle in a fluoride atmosphere.

Hereinafter, the "particle stirring reaction" by addition of the fluoride is going to be described.

At the initial period of the reaction, by stirring, aluminum (Al) and sodium metaborate ($NaBO_2$) contact to each other so that the sodium metaborate is attached to the aluminum (Al) particle. Due to this attachment, the oxidized film on the surface of aluminum (Al) absorbs sodium oxide ($Na_2O$) to become needle-like iota-alumina (0.67Na·6Al·9.330) by the catalytic action of the fluoride ion. The iota-alumina is known as a precursor of β-alumina in the low-temperature β-alumina synthesis method such as the sol-gel method. The iota-alumina has the structure and ion permeability similar to those of β-alumina. This allows particularly the sodium ion to readily permeate through the oxidized film on the aluminum (Al) surface. This iota-alumina forms a layer on the surface of aluminum (Al).

Inside of the thin oxidized film layer (about 5 to 10 nm) that is converted to the iota-alumina at the initial period of the reaction, the sodium oxide ($Na_2O$) is changed to sodium (Na) by the reducing action of the aluminum (Al); then in turn, the sodium (Na) is changed to the sodium hydride (NaH) by hydrogen ($H_2$).

On the other hand, because the Na ion is present in high concentration, the aluminum oxide ($Al_2O_3$) simultaneously formed is immediately neutralized by the sodium oxide ($Na_2O$) to become sodium aluminum dioxide ($NaAlO_2$).

When the fluoride ion is present, due to the catalytic action thereof, the sodium aluminum dioxide ($NaAlO_2$) is crystallized as the iota-alumina (0.67Na·6Al·9.330) with releasing the sodium oxide ($Na_2O$). This iota-alumina is a needle-like crystal.

It is presumed that the iota-alumina becomes the needle-like crystal because of the reaction in which the crystal thereof grows with releasing sodium oxide ($Na_2O$) during the course of crystallization. Namely, it is presumed that the crystal grows preferentially to the direction where the concentration of sodium oxide ($Na_2O$) is low; and thus, the iota-alumina grows in the shape that extends to one direction, resulting in the needle-like crystal of the iota-alumina.

The sodium hydride (NaH) migrates to the surface of the aluminum particle by permeating through the iota-alumina layer. On the surface of the aluminum particle, this contacts and reacts with the sodium metaborate ($NaBO_2$) to form the sodium borohydride (SBH) and the sodium oxide ($Na_2O$) .

At 490°C or higher, which is the condition necessary for the reaction, the sodium borohydride (SBH) is in a molten state; and thus, the sodium borohydride (SBH) becomes a solvent for the sodium hydride (NaH) and the sodium oxide ($Na_2O$), thereby serving as the medium of the mass transfer that fills the iota-alumina layer.

In addition, the sodium borohydride (SBH) in the molten state makes it easier for the sodium borohydride (SBH) to adhere to the sodium metaborate ($NaBO_2$). Then, the sodium hydride (NaH) included in the sodium borohydride (SBH) reacts with the sodium metaborate ($NaBO_2$) to further produce the sodium borohydride ($NaBH_4$) and the sodium oxide ($Na_2O$). The sodium oxide ($Na_2O$) returns into the aluminum particle by contacting with the particle by stirring, so that this becomes the raw material of the sodium hydride.

On the other hand, in the iota-alumina having grown to the needle-like shape, it is presumed that the sodium ion can move with the fastest speed. When the sodium borohydride (SBH) is mainly included in the space among the needle-like crystals, the space among the needle-like crystals becomes the passing channel for the sodium ion, the boron ion, the oxygen ion, the aluminum ion, and the fluoride ion. Accordingly, when the sodium ion, the boron ion, the oxygen ion, the aluminum ion, and the fluoride ion pass through the iota-alumina layer, the conversion reaction to the sodium borohydride (SBH) also takes place in the iota-alumina layer.

As described above, when the inside and outside of the iota-alumina layer of the aluminum (Al) particle as well as the surface of the sodium metaborate ($NaBO_2$) particle become the condition that allows the reaction to take place therein, the aluminum (Al) particle that includes the products and the product intermediates contacts with the sodium metaborate ($NaBO_2$) particle with each other by stirring. As a result, the high-speed uniform mixing of and migration to the particles of the sodium borohydride (SBH), the sodium hydride (NaH), the sodium oxide ($NaO_2$), the sodium metaborate ($NaBO_2$), and the aluminum ion, which are difficult to be achieved by a mere diffusion reaction, can be realized, so that the formation reaction to the sodium borohydride (SBH) can be facilitated.

Besides the action to facilitate crystallization to the iota-alumina as described above, the action of the fluoride is to form a NaAlF layer (the system of a mixture of cryolite, sodium fluoride, and aluminum fluoride) on the aluminum surface; then, this reacts with the aluminum to form a lower aluminum fluoride (presumably $AlF_{1.5}$), which is a strong reducing substance. This lower aluminum fluoride together with the hydrogen reduces the sodium oxide to form the sodium hydride, the aluminum oxide, and the sodium fluoride. The lower aluminum fluoride is movable through the sodium borohydride. In addition, the lower aluminum fluoride and the sodium hydride partially evaporate at high concentration and temperature, so that they are movable also in the gas phase. Because of these actions, the sodium hydride moves or is formed also in the place other than the aluminum surface, so that the sodium borohydride formation reaction is facilitated, thereby contributing to the increase in the reaction yield.

$$2AlF_{1.5} + 3Na_2O + +3/2H_2 \rightarrow 3NaF + 3NaH + Al_2O_3 \quad (1)$$

Under these circumstances, the formation reaction of the sodium hydride (NaH) takes place mainly on the surface of the aluminum (Al) particle, while the formation reaction of the sodium borohydride (SBH) and the alumina can take place inside of the iota-alumina layer, outside of the iota-alumina layer, and on the sodium metaborate ($NaBO_2$) particle.

The raw material sodium metaborate ($NaBO_2$), together with the intermediate product sodium oxide ($Na_2O$), also contacts with the aluminum (Al) particle, thereby resulting in a circulation reaction.

As described above, due to the contact of the particles to each other, the raw material sodium metaborate ($NaBO_2$) and the sodium borohydride, which is the migration medium of the intermediate products, repeat the mass transfer not only inside of the aluminum (Al) particle, but also on the surface of and inside of each particle, resulting in the fast reaction. In this embodiment, the state like this is hereinafter called "particle stirring reaction".

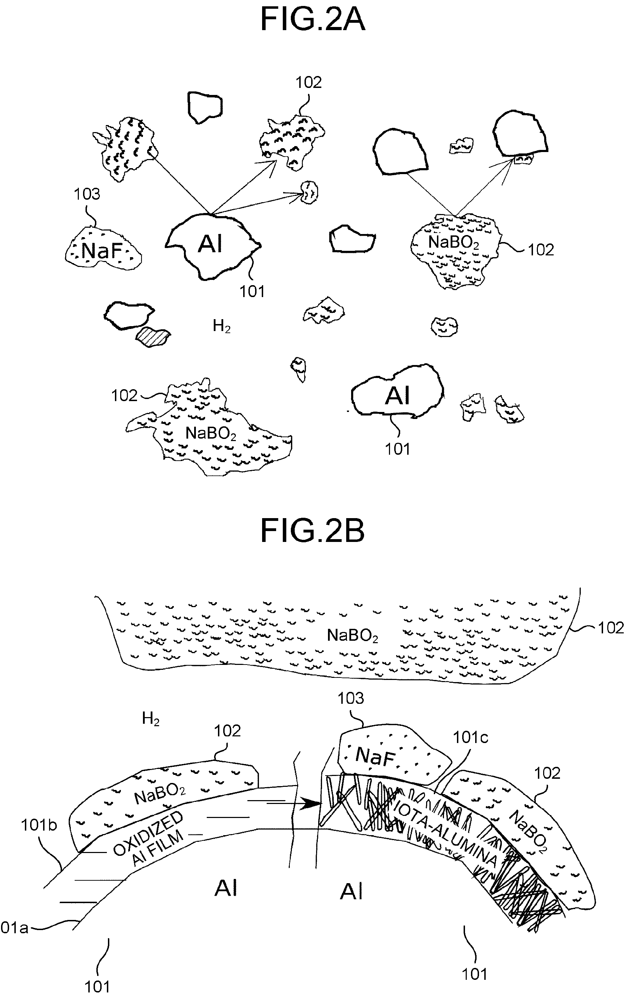

Next, the process to form the sodium borohydride (SBH) by using sodium fluoride (NaF) as the fluoride will be described in detail with referring to the schematic drawings of the reaction (FIG. 2A to FIG. 2F). FIG. 2A to FIG. 2F are the schematic drawings of the formation reaction of the sodium borohydride (SBH). Here, the fluoride (for example sodium fluoride: NaF) is added in order to increase the reaction yield of the sodium borohydride, as described above. The fluoride has two actions to aluminum. The first action is to facilitate crystallization of alumina, and the second action is to form the NaAlF layer on the aluminum surface thereby supplying the strongly reducing substance to outside of the aluminum

particle thereby facilitating the reduction.

1) Stirring Initial Period-1

As illustrated in FIG. 2A, particles of three components (aluminum (Al) 101, sodium metaborate ($NaBO_2$) 102, and sodium fluoride (NaF) 103) contact to each other, thereby causing the breakage and attachment of the particles.

2) Stirring Initial Period-2

As illustrated in FIG. 2B, on the surface 101a of the aluminum (Al) 101 particle, a dense oxidized Al film ($Al_2O_3 \cdot H_2O$) 101b is formed by natural oxidation.

The thickness of this dense oxidized Al film 101b formed by the natural oxidation is about 0.01 $\mu$m. The dense oxidized Al film 101b on the surface of the aluminum particle releases water at high temperature (around 300°C), and whereby this converts to the iota-alumina with the help of the crystallization facilitation action of the sodium fluoride (NaF) 103, resulting in the needle-like iota-alumina (0.67Na·6Al·9.330) layer 101c.

3) Reaction Initial Period-3

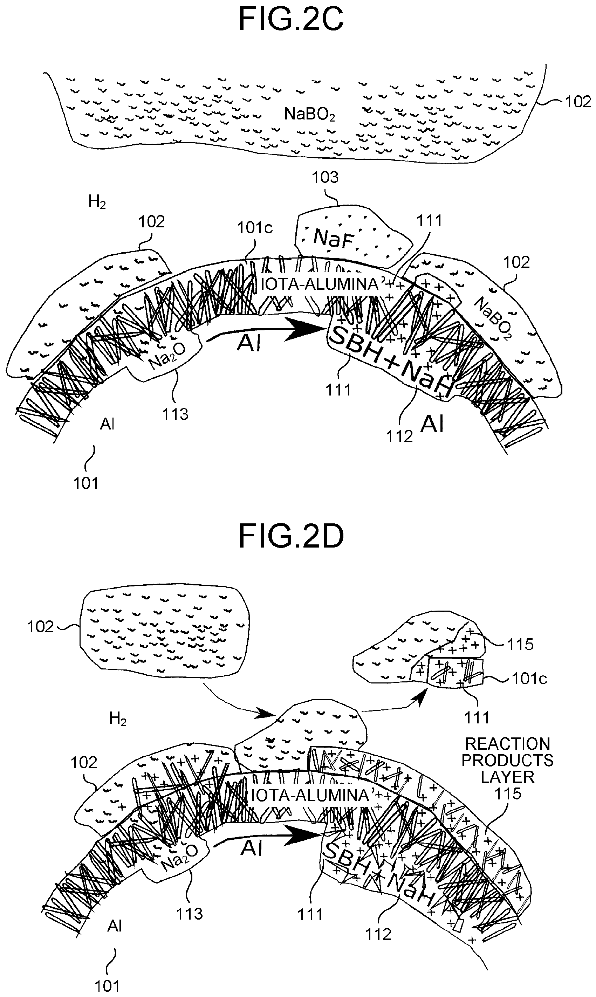

As illustrated in FIG. 2C, inside of the needle-like iota-alumina layer 101c, mainly the hydrogen ion ($H^+$) in the atmospheric hydrogen ($H_2$) and the sodium ion ($Na^+$) of the sodium metaborate are movable. Then, due to the moved hydrogen ion and sodium ion, the reaction starts inside of the needle-like iota-alumina layer 101c; then, the sodium borohydride (SBH) 111 and the sodium hydride (NaH) 112, which are the reaction products, exude to the outside of the needle-like iota-alumina layer 101c. Then, diffusion of the sodium oxide ($Na_2O$) 113 takes place inside and outside of the iota-alumina (0.67Na·6Al·9.330) layer 101c.

4) Reaction Middle Period

As illustrated in FIG. 2D, by the particle stirring reaction, the hydrogen ion ($H^+$), the sodium ion ($Na^+$), the aluminum ion ($Al^{3+}$), the metaborate ion ($BO_2^-$) from the sodium metaborate ($NaBO_2$) 102, and the oxygen ion ($O^{2-}$), each migrate through the needle-like iota-alumina layer 101c; then, the reaction starts inside and outside of the needle-like iota-alumina layer 101c to form the reaction products layer 115 (sodium borohydride (SBH) 111 and sodium hydride (NaH) 112).

5) Reaction Peak Period

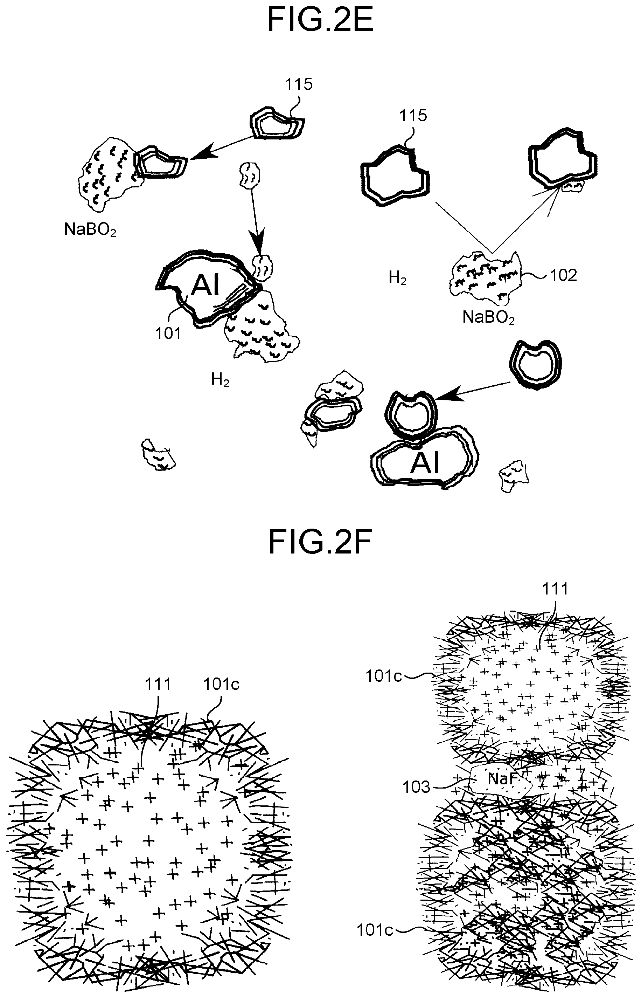

As illustrated in FIG. 2E, due to the particle stirring reaction, particles of the three components repeat the contact among them, so that supply of the sodium metaborate ($NaBO_2$) 102 to the aluminum 101 particle and migration of the reaction products (sodium borohydride (SBH) 111 and sodium hydride (NaH) 112) from the aluminum 101 particle to the sodium metaborate ($NaBO_2$) 102 take place at a high speed by the particle stirring.

6) Termination of Reaction

As illustrated in FIG. 2F, the whole of the aluminum 101 particle becomes the sodium borohydride (SBH) 111, which is the reaction product, and the needle-like iota-alumina layer 101c.

At the first step (S-11), there is no particular restriction in the temperature of the inside of the tightly sealed vessel at the time of charging of the raw materials as far as the temperature is lower than 100°C. Because it is not necessary to dare to heat up inside of the tightly sealed vessel, the temperature therein may be set to normal temperature. Here, in order to avoid the reaction between the sodium metaborate and a moisture in an air, it is necessary to tightly seal the vessel promptly after the raw materials are charged thereto.

In the production of the sodium borohydride, the aluminum is consumed by oxidation. Because of this, at the first step the aluminum is charged into the tightly sealed vessel such that the mole ratio of the aluminum to the boron in the sodium metaborate may be 4/3 or more.

It is preferable that the aluminum powder be 120% or more in terms of mole ratio to the amount necessary for synthesis of the sodium borohydride. Part of the excess aluminum is consumed by the reaction with water; but this also contributes to the increase in the chance of the contact with the sodium metaborate when the amount of the raw material aluminum is decreased as the reaction advances, so that the reaction yield may be increased.

[Second Step]

As illustrated in FIG. 1, the second step (S-12) is the step at which after the first step, inside of the tightly sealed vessel is heated to the temperature of 280°C or higher and 560°C or lower without stirring to cause the residual water included in the sodium metaborate and in the aluminum powder to react with the aluminum to form hydrogen gas and aluminum oxide.

Namely, at this step, the vaporized water, i.e., the residual water in the tightly sealed vessel, is caused to react with aluminum, or the water is removed from the reaction system by degassing using a vacuum pump.

At this step, when the aluminum is caused to react with water, the aluminum oxide and hydrogen gas are formed. More specifically, the water vapor permeates the oxidized aluminum film, and then, the aluminum and water are reacted to form the aluminum oxide and hydrogen gas. The reaction of water with the aluminum is described by the following reaction formula (2).

$$2Al + 3H_2O \rightarrow Al_2O_3 + 3H_2 \qquad (2)$$

In general, because there is a defect in the oxidized film of aluminum, the gas permeates the film. The water vapor reaches the aluminum base thereby oxidizing the aluminum to generate the hydrogen gas.

When the heating condition in the gasification process at the second step is 280°C or higher, the sodium metaborate hydrate can completely release water. But, because the crushed sodium borate powder is prone to adsorb water, the releasing temperature becomes higher; thus, the dehydration drying temperature is preferably 400°C or higher. By so doing, water in the atmosphere can be removed in a shorter time.

In addition, at this second step, a prebaking may be carried out for one hour or longer at a temperature of 400°C or higher and 560°C or lower under a non-oxidative condition without starting the stirring. By conducting this prebaking, it is possible to increase the reaction rate in the later stage of the reaction at the next third step.

Furthermore, after the first step, without starting the stirring, water-removal may be carried out at a temperature of 280°C or higher and 560°C or lower in an air before the prebaking so that both this water-removal and the prebaking may be effected concurrently.

[Third Step]

As illustrated in FIG. 1, in this embodiment, after completion of the second step (S-12) described above, the third step (S-13) described below is arranged so that the sodium borohydride can be produced.

In this embodiment, in the reaction to produce the sodium borohydride, the powders are contacted to each other as they are in the solid state to cause the reaction on the surface of aluminum; then, the products and the raw materials are caused to migrate by diffusion thereby continuing the reaction. At this time, in order to facilitate the mass transfer of these substances, a kinetic energy by stirring may be given.

As production of the sodium borohydride progresses, the amount of hydrogen in the reaction vessel decreases, but by increasing the hydrogen gas pressure, the reaction rate can be increased. The reaction here can be expressed by the following reaction formula (3).

$$4Al + 6H_2 + 3NaBO_2 \rightarrow 3NaBH_4 + 2Al_2O_3 \qquad (3)$$

At the third step, the tightly sealed vessel used at the first step to the second step may also be used here as it is, or a different tightly sealed vessel may be used. Namely, the process from the first step to the third step may be carried out as the process in a single tightly sealed vessel or as the process in different tightly sealed vessels.

The hydrogen gas pressure retained at the third step is preferably in the range of 0.5 MPa or more to 10 MPa or less. It is still more preferably in the range of 0.7 MPa to 10 MPa. By setting the hydrogen gas pressure in the range of 0.3 MPa or more to 10 MPa or less, not only the production efficiency of the sodium borohydride is excellent, but also the reaction vessel, the equipment, and the like that are high in the pressure resistance are not necessary; and thus, the increase in the equipment cost can be suppressed.

At the third step, in order to satisfactorily carry out the reaction, the heating temperature is set at 490°C or higher and 560°C or lower. By setting the heating temperature at 490°C or higher and 560°C or lower, a sufficient reaction rate can be obtained. Therefore, not only the production efficiency of the sodium borohydride is excellent, but also sublimation of the resulting sodium hydride and sodium borohydride can be suppressed, so that a sufficient yield can be obtained.

Here, the reaction temperature is set to 490°C or higher so as to form the needle-like iota-alumina and to make the product sodium borohydride (SBH) to a molten state thereby facilitating the reaction. Namely, even by the reaction lower than 490°C, the oxidized film of the aluminum (Al) can be converted to the iota-alumina, but the formation speed of the iota-alumina becomes so slow that a so-called long needle-like iota-alumina, which is formed at 490°C or higher, changes to a

short iota-alumina. On top of this, at a temperature below 490°C, because the sodium borohydride (SBH) does not become the molten state but is in a solid state, the permeation through the iota-alumina layer becomes so slow that the amount of the sodium borohydride that exudes together with sodium hydride (NaH) to outside of the aluminum (Al) particle decreases significantly. Accordingly, most of the reaction is the reaction that takes place inside of the aluminum (Al) particle between the boron ion and the sodium hydride (NaH), these having permeated through the iota-alumina layer; so, the reaction to produce the products is not sufficiently facilitated.

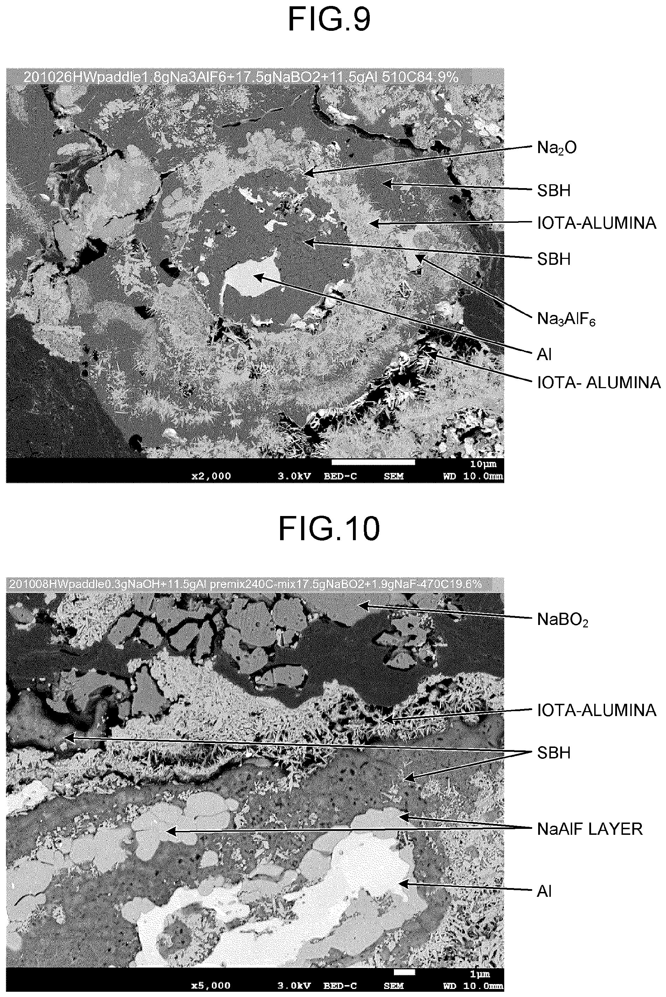

The presence states of the needle-like alumina layer and of the sodium borohydride (SBH) at different reaction temperatures are compared in FIG. 9 and FIG. 10. The black substance outside the particle in FIG. 9 and FIG. 10 is carbon, which is the dispersing material. FIG. 9 is the SEM backscattered electron image of the products when the reaction temperature is 510°C. FIG. 10 is the SEM backscattered electron image of the products when the reaction temperature is 478°C. As can be seen in FIG. 9, the needle-like iota-alumina layer is formed around the central aluminum (Al), and the sodium borohydride (SBH) fills all the inside of the iota-alumina layer, as well as the outer and inner layers thereof. When the reaction temperature is 510°C, the sodium borohydride (SBH) permeates as the molten body through the iota-alumina layer and exudes to the outside thereof, and adheres the surrounding sodium metaborate ($NaBO_2$) particles.

On the other hand, as can be seen in FIG. 10, when the reaction temperature is 478°C, because the reaction temperature is lower than 490°C, many of the sodium borohydride (SBH) are present inside of the iota-alumina layer.

In addition, there are many open spaces present in the outer needle-like iota-alumina layer. It is presumed that migration by diffusion is difficult in the open space, resulting in the state that the reaction rate is dramatically decreased. In FIG. 10, in the outside thereof, it is recognized that the sodium borohydride is present faintly. This is presumably the sodium borohydride that is formed by the reaction of the sodium hydride gas or the lower aluminum fluoride gas with boric acid; these gases being diffused in the gaseous state.

Through the first step to the third step described above, the sodium borohydrides (SBH) can be produced.

In addition, after the third step, as the posttreatment, the fourth step with keeping the temperature at the third step (hereinafter, after-baking) may be carried out. This fourth step may be continued in the tightly sealed vessel equipped with the stirrer used at the third step or may be continued after having been transferred to a tightly sealed vessel not equipped with a stirrer.

Next, the time from the start of the stirring until the start of the reaction (time lag) at the third step will be described. At the third step, the time until the start of the reaction is called a time lag. The sum of the sodium hydride (NaH) and the sodium borohydride (SBH) to the total amount of the raw materials to be reacted, necessary at least to start the particle stirring reaction, is the hydrogen decreased amount of 2.5 to 3.5%, which corresponds to the amount of boron (B) in the raw material. The ratio of these hydrides can be measured by the hydrogen decreased amount.

The time lag described here is determined to be the time from the start of the stirring until the reaction yield reaches 3%. The reaction rate until the start of the particle stirring reaction is very slow. This slowness is due to the presence of the oxidized aluminum film that is formed on the surface of the aluminum (Al) particle. Namely, the oxidized aluminum film is a very hard barrier to the mass transfer (the thickness thereof is estimated to be 5 nm to 10 nm). When sodium oxide ($Na_2O$) diffuses into the aluminum particle, the aluminum oxidized film becomes the oxide film containing sodium oxide ($Na_2O$). When the sodium oxide ($Na_2O$) reaches the inside of this oxidized film layer and reacts with aluminum (Al), the sodium oxide ($Na_2O$) is reduced to form sodium (Na) and alumina $Al_2O_3$. This sodium (Na) reacts with hydrogen ($H_2$) to form the sodium hydride (NaH). Then, the sodium hydride (NaH) migrates to the outside of the oxidized film layer to react with the sodium metaborate ($NaBO_2$) thereby forming the sodium borohydride (SBH).

The aluminum oxide ($Al_2O_3$) inside of the oxidized film reacts with the sodium oxide ($Na_2O$) to become the sodium aluminum dioxide ($NaAlO_2$). Then, because of the presence of the fluoride ion, crystallization of the iota-alumina (0.67Na·6Al·9.330) advances thereby changing to the thick needle-like iota-alumina layer.

It was found that when the reaction yield, which is the ratio of the aluminum (Al) particle thus changed to the raw material in terms of the hydrogen decreased amount, reaches about 3%, the "particle stirring reaction" takes place very rapidly.

In the embodiment as described above, too, the sodium metaborate and the aluminum powder may be separately charged into the tightly closed vessel sequentially, or they may be charged into the tightly sealed vessel as the mixture of them. When charged as the mixture, it is preferable that the step to mix the sodium metaborate with the aluminum powder to obtain the mixture be arranged before the first step, and then, at the first step, the sodium metaborate and the aluminum powder be charged into the reaction vessel as the form of the mixture. When the aluminum powder and the sodium metaborate are mixed in advance thereby using the raw materials in the mixed state, the initial reaction rate can be increased.

In the case that the aluminum powder and the sodium metaborate are made to the mixture, they may be mixed dispersedly in advance followed by pressing the resulting mixture to be pelletized using a molding machine. There is a merit in the pellet, among other things, that the pellet is more resistive to absorb the moisture than the powder thereby having an excellent handling property.

The fluoride, the sodium metaborate, and the aluminum powder may be separately charged into the tightly sealed

vessel sequentially. Alternatively, after the fluoride and the aluminum are first mixed so as to attach the fluoride onto the aluminum surface, then the sodium metaborate may be charged therein. Further alternatively, they may be charged as the mixture containing them.

By adding the sodium fluoride (NaF) as the fluoride to the sodium metaborate powder, the mole ratio of the sodium that is included in the alkali metal and the sodium borate to the boron in the sodium borate (hereinafter, this is called Na/B (mole ratio)) becomes 1 or more, so that the reaction yield of the sodium borohydride may be increased.

Here, Na/B (mole ratio) is preferably more than 1.

The method of this embodiment is carried out in the reaction system that includes the aluminum powder (solid), the sodium metaborate powder (solid), the fluoride (solid), and the hydrogen (gas). In this reaction system, in order to satisfactorily proceed the reaction, it is necessary to satisfy two conditions; namely, to remove the oxidized film on the surface of the aluminum particle, and in order to proceed the reaction, to supply a migration energy so as to homogenize the concentration of the raw materials or of the products in the solid.

In order to remove the effect of the oxidized film of aluminum during initial period, it is necessary to make a scar in the oxidized film on the aluminum surface by stirring to generate a new surface, whereby the raw material contacts with the aluminum to start the reaction. Alternatively, it is necessary for the sodium oxide to be diffused and penetrated into the oxidized film so as to form the iota-alumina thereby enabling the metal ions to be diffused therein. The period until the start of this reaction is an induction period.

Once the reaction starts, sodium oxide ($Na_2O$) is supplied to the aluminum surface, so that the reaction to form the sodium hydride by reduction with aluminum take place. The sodium borohydride then acts as an adhesive, so that the sodium hydride and sodium metaborate are exchanged at the aluminum particle and the sodium metaborate particle. With this, the reaction between the sodium hydride and the sodium metaborate takes place, resulting in the reaction to further form the sodium borohydride. In this particle stirring reaction, the reaction proceeds very quickly by stirring and mixing in the state of particle, so that there is no need to stir by using a medium; the reaction proceeds only by the particle-to-particle contact.

Next, one example of the tightly sealed vessel that can be used in this embodiment will be described, but this embodiment is not limited to those described below.

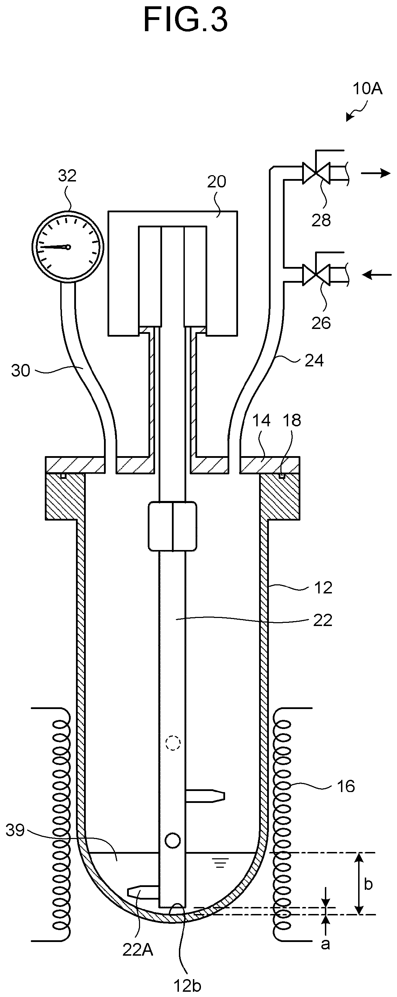

FIG. 3 is a partial sectional view that illustrates one example of the tightly sealed vessel to be used in this embodiment.

As illustrated in FIG. 3, a tightly sealed vessel 10A has a vessel main body 12 having a round cylindrical bottom, and a disk-like detachable cap 14 that tightly seals the vessel main body 12. A temperature-controllable heater 16 is arranged in the lower outside of the vessel main body 12, so that the contents in the vessel main body 12 may be heated by the heater 16. An O-ring 18 is arranged in the upper end plane of the vessel main body 12 to ensure the air tightness of the inside of the vessel by tightly contacting to the cap 14. When the cap 14 is closed, the cap 14 is in the state of tightly contacted to the vessel main body 12 by the O-ring 18.

The cap 14 has an opening in the center thereof, and a cylindrical portion is vertically arranged near to the opening, and a motor 20 is arranged on the upper side of the cylindrical portion. The stirring equipment is composed of the motor 20, a stirring rod 22 that is connected to a rotation axis of the motor 20, and a plurality of pin-like stirrers 22A that are arranged in a perpendicular direction to the axis of the stirring rod 22. When the cap 14 is attached to the vessel main body 12, the front end of the stirring rod 22 reaches a lower area of the inside of the vessel main body 12. Namely, when the motor 20 is driven, the pin-like stirrer 22A rotates together with the stirring rod 22 so that contents in the vessel main body 12 are stirred.

The cap 14 is further equipped with a first pipe 24 and a second pipe 30 that communicate with the inside of the vessel main body 12. The first pipe 24 is connected to a hydrogen gas supplying source (not illustrated in the drawing) via a hydrogen gas supplying valve 26, and to a vacuum pump (not illustrated in the drawing) via a gas discharging valve 28. Namely, when the hydrogen gas supplying valve 26 is made to be an opened state, a hydrogen gas is supplied into the vessel main body 12, and when the gas discharging valve 28 is made to be an opened state, inside of the vessel main body 12 is degassed. The second pipe 30 is connected to a pressure gauge 32 so that the pressure of inside the vessel main body 12 can be known by the pressure gauge 32.

As illustrated in FIG. 3, the minimum clearance (a) between the stirrer 22A and the inner circumferential surface of the vessel main body 12 of the tightly sealed vessel 10A is set in the range of 0 mm to 4 mm, as described in Test Examples to be described later. This range is set in order to bring the stirring height ratio to be 75% or more, in which this height ratio is determined from the size of the vessel in Test Example and the amount and bulk density of the raw material. When the clearance a between a lowest portion 22a and an inner circumferential surface 12b of the vessel's bottom portion is set to 4 mm or less, the sodium metaborate ($NaBO_2$) piece in a raw material 39 is attached to the aluminum (Al) particle the amount of which is necessary at least to start the reaction by the pin-like stirrer 22A of the stirring rod 22. With this, the oxidized film of the aluminum (Al) particle changes to the iota-alumina layer, forming the sodium hydride (NaH) necessary for the entire aluminum (Al) particle to be reacted, as well as the sodium borohydride (SBH). Until the start of this reaction, there is a long run-up period called the time lag as described before; but when the reaction of the sodium hydride (NaH) starts, the sodium

borohydride (SBH) plays a role as the mass transfer medium of the sodium hydride (NaH), so that on the aluminum (Al) surface, the very rapid reaction to form the sodium borohydride (SBH) takes place in all the particles.

When the reaction yield reaches 40 to 60%, the ratio of the sodium borohydride (SBH) increases; then, this functions as an adhesive. As a result, the particles covered with the product can be readily adhered to each other to form a ball. In the case of a short pin-type stirrer, this lacks the power to press toward the wall, so that the balls thus formed come together thereby becoming something like a bread dough.

Because the sectional area of the pin-type stirrer is small and the length thereof is short, the amount of the product that is attached onto the stirrer is also small. Therefore, the product is made to move like the bread dough by the pin, so that the reaction continues under the mass transfer state in which the diffusion speed is slower than the particle stirring state but faster than the static state; thus, comparatively high reaction rate and reaction yield can be obtained.

On the other hand, like the tightly sealed vessel 10A as illustrated in FIG. 3, when the clearance a between the side of the lowest portion 22a of the stirring rod 22 and the side of the inner circumferential surface 12b of a bottom portion 12a of the vessel main body 12 is set to 5 mm or more, the stirring strength is decreased, thereby decreasing the ratio of the oxidized film of the aluminum (Al) particle that becomes the iota-alumina. As a result, the amounts of the sodium hydride (NaH) and the iota-alumina layer thus formed are so little that the time lag of the reaction becomes too long to start the reaction within a practical time, and thus, the reaction yield is extremely lowered.

In the tightly sealed vessel, the stirring height ratio (hereinafter, this is also called "height ratio") is preferably 75% or more. Here, the stirring height ratio is the relational ratio expressed by the following numerical formula (I) in which the minimum clearance between the stirrer 22A and the lowest portion in the gravity direction of the tightly sealed vessel 10A is designated by a, and the height of the raw material 39 when the raw material is charged into the tightly sealed vessel 10A is designated by b.

$$X = [(b-a) / b] \times 100 \quad \text{Formula (I)}$$

As indicated in Test Examples to be described later, when the stirring height ratio (X) was 75% or more, the particle stirring reaction was satisfactory, but when the stirring height ratio (X) was less than 75%, the particle stirring reaction did not proceed. Here, when the stirring height ratio (X) is 100%, the reaction rate and the reaction yield are the highest.

For example, when the minimum clearance between the stirrer 22A and the inner circumferential surface of the vessel main body of the tightly sealed vessel 10A is a = 4 mm, and the raw material charging height in the tightly sealed vessel is b = 17.7 mm, X becomes 77% (see, Test Example 3 to be described later).

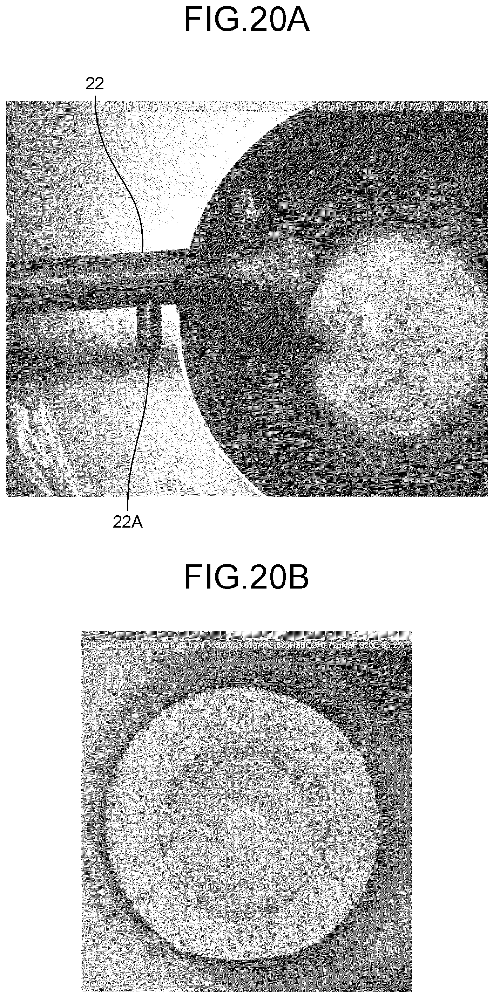

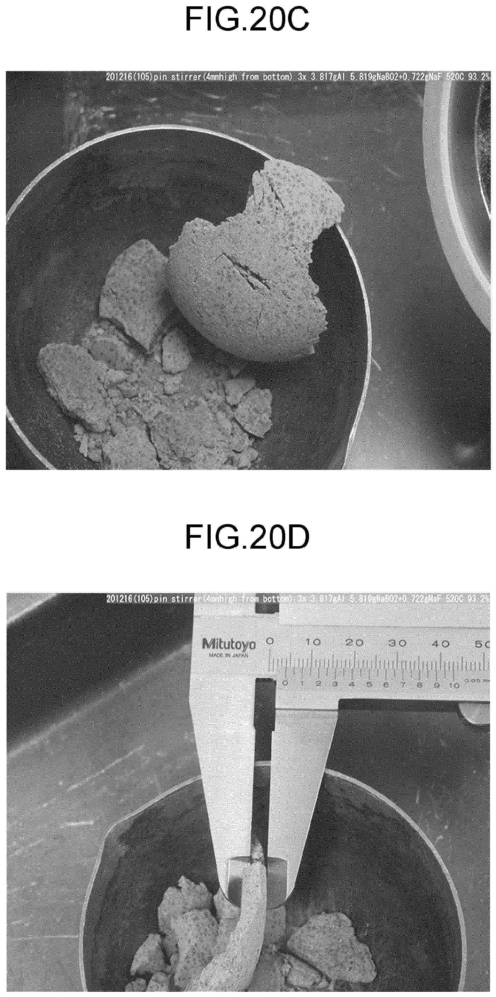

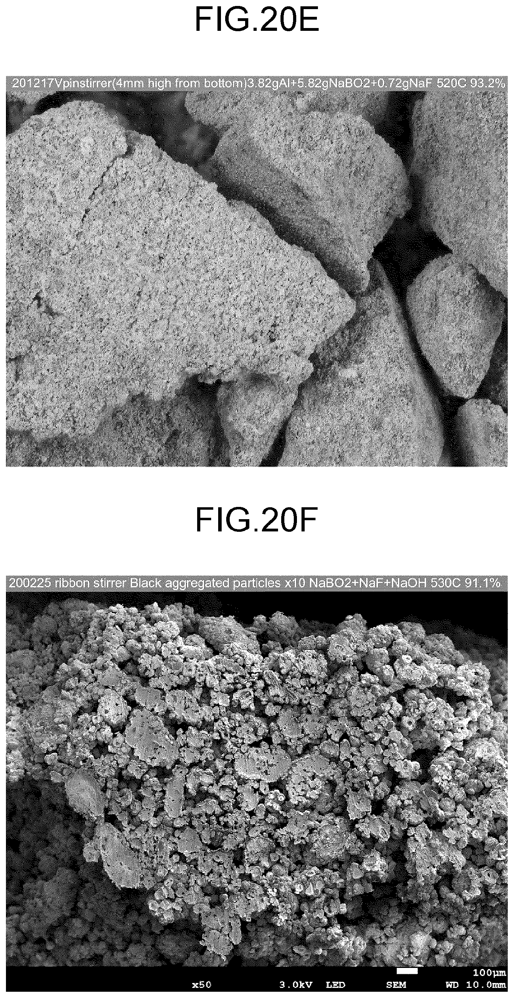

FIG. 20A to FIG. 20F are the photographs that illustrate one example when the sodium borohydride (SBH) was produced by using the tightly sealed vessel 10A (clearance a = 4 mm) in FIG. 3 with the height ratio (X) of 77%. FIG. 20A is the photograph of the stirrer that was taken after the sodium borohydride (SBH) was produced by rotating the stirrer. FIG. 20B is the photograph of the product that was taken after the sodium borohydride (SBH) was produced by rotating the stirrer. FIG. 20C is the photograph of the sodium borohydride (SBH) that was scraped off from the vessel after completion of the stirring for a prescribed period. FIG. 20D is the photograph when the thickness of the obtained product was measured. The thickness of the product at the bottom portion indicates 4 mm. FIG. 20E is an enlarged photograph of the obtained product. FIG. 20F is the sectional SEM photograph of the lump of the product with the reaction yield of 91.1%. The cross section of the product that is in the form of lump indicates that the reaction product particles are partially adhered to each other and that there are spaces between the reaction product particles.

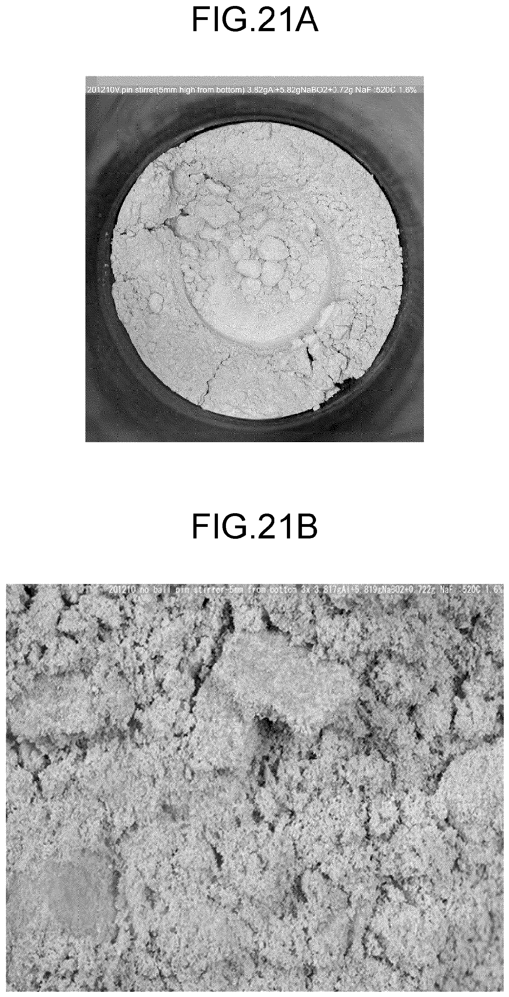

FIG. 21A to FIG. 21B are the photographs that illustrate one example when the sodium borohydride (SBH) was produced by using the tightly sealed vessel 10A (clearance a = 5 mm) that is illustrated in FIG. 3 with the height ratio (X) of 72%. FIG. 21A is the photograph of the product that was taken after the sodium borohydride (SBH) was produced by rotating the stirrer. FIG. 21B is the enlarged photograph of the product after completion of the stirring for a prescribed period.

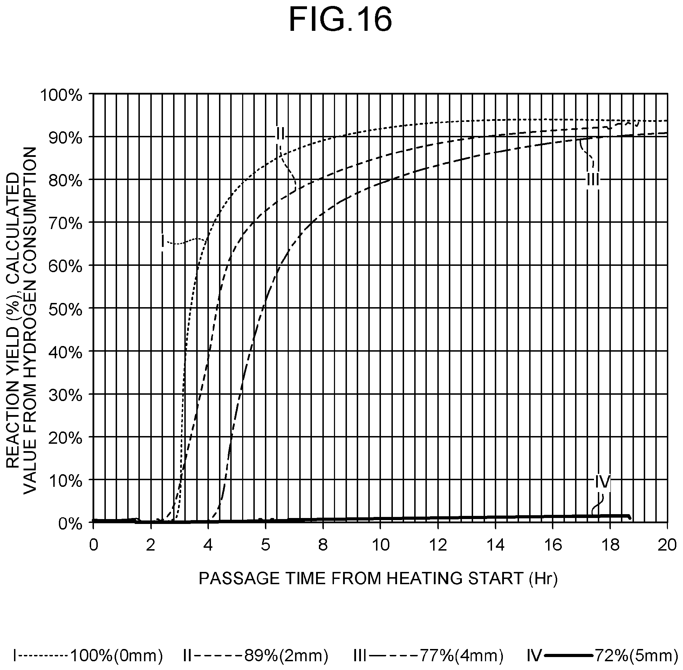

As can be seen in FIG. 16, when the tightly sealed vessel 10A (height ratio X = 77%) that is illustrated in FIG. 3 was used, formation of the sodium borohydride (SBH) progressed satisfactorily. Here, this state exceeds the reaction yield of 3%, which is necessary to start the reaction of the raw material in the stirring section at the start of the reaction. The sodium borohydride formation reaction progresses with the start of the particle stirring reaction, and as can be seen in FIG. 20C some wrinkles are observed on the bottom side of the product after the test, and open spaces are observed in the cross section of the product as can be seen in FIG. 20F. This indicates that the adhesive force of the molten sodium borohydride made the dough-like product, and while the pins of stirrer 22A integrated the entire products, the mass transfer took place in the product. The mass transfer speed in the stirring to integrate the entire products to the dough-like product (hereinafter referred to as "dough stirring") was slower than the mass transfer speed in the particle stirring reaction, but faster than the mass transfer speed by diffusion under a static state. Because of this, the particle stirring reaction takes place firstly, then, the sodium borate adheres to the aluminum particles thereby causing the local mixing of the product. The entire product is then mixed by the dough stirring to achieve a reaction yield of 90% or more of the target sodium borohydride.

On the contrary, when the tightly sealed vessel 10A as illustrated in FIG. 3 (height ratio X = 72%) having the same length of the pin-like stirrer is used, as can be seen in FIG. 21A, the central open space diameter after stirring is the same as the stirrer length, and the open space diameter is smaller than in FIG. 20B. Because the stirring sectional area was decreased and whereby the stirring strength was decreased, the raw material in the stirring section at the start of the reaction failed to exceed the reaction yield of 3%, which is necessary to start the particle stirring reaction. Accordingly, because the product was failed to become like a so-called bread dough, formation of the sodium borohydride (SBH) was unsatisfactory. As a result, as can be seen in Comparative Example to be described later, the reaction yield of the target sodium borohydride was 2% or less (see, Comparative Example 1 to be described later). From FIG. 21B, it can be seen that the product with a clearance a of 5 mm was in the state of discrete powders close to that of the raw material.

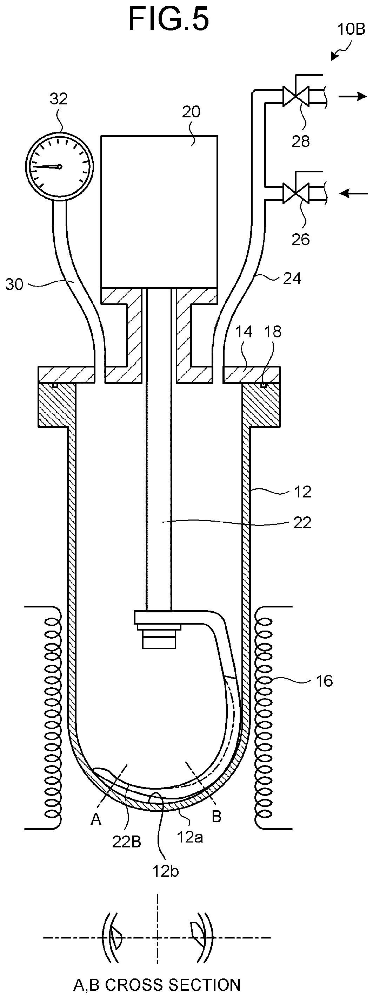

FIG. 5 is a partial sectional view illustrating another example of the tightly sealed vessel used in this embodiment. The difference from the tightly sealed vessel 10A of FIG. 3 resides in that as illustrated in FIG. 5, a tightly sealed vessel 10B has a J-type stirring portion 22B in the lower end portion of the stirring rod 22 that rotates inside of the vessel main body 12. The J-type stirring portion 22B is formed so as to be warped along the inner circumferential surface of the bottom portion 12a of the vessel main body 12. When the raw material is charged into the vessel main body 12 and the stirring rod 22 is rotated, at the time of stirring, the raw material is difficult to attach to the inner wall of the vessel because the J-type stirring portion 22B is warped along the inner circumferential surface of the bottom portion 12a. Here, in the tightly sealed vessel of FIG. 5, too, the clearance a of the J-type stirring portion 22B to the inner circumferential surface of the bottom portion 12a is set in the range of 0 mm to 4 mm.

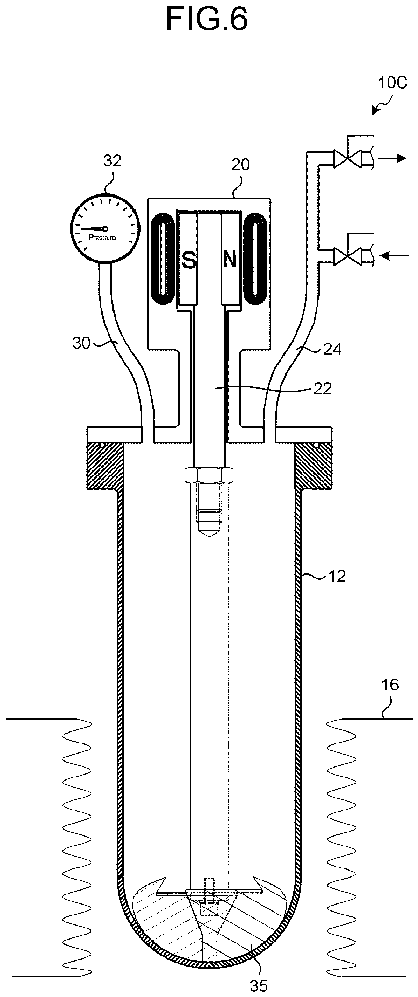

FIG. 6 is a partial sectional view illustrating another example of the tightly sealed vessel used in this embodiment. The difference from the tightly sealed vessel 10A of FIG. 3 resides in that a tightly sealed vessel 10C has a plurality of scrapers 35 so as to form the multi-blades in the lower end portion of the stirring rod 22 that rotates inside of the vessel main body 12.

Here, in the tightly sealed vessel 10C of FIG. 6, too, the clearance a of the front end in the side of the inner circumferential surface of the scraper 35 to the inner circumferential surface of the bottom portion 12a is set in the range of 0 mm to 2 mm.

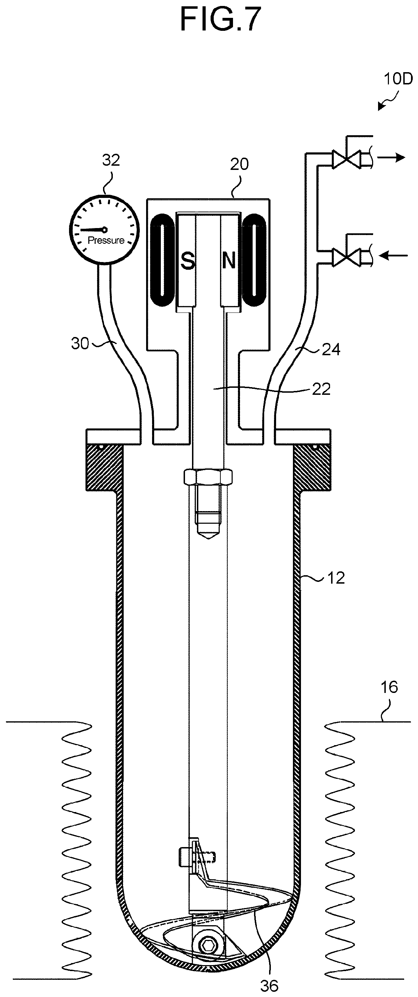

FIG. 7 is a partial sectional view illustrating another example of the tightly sealed vessel used in this embodiment. The difference from the tightly sealed vessel 10A of FIG. 3 resides in that a tightly sealed vessel 10D has a spiral ribbon-like scraper 36 in the lower end portion of the stirring rod 22 that rotates inside of the vessel main body 12. Here, in the tightly sealed vessel 10D of FIG. 7, too, the clearance a of the front end in the side of the inner circumferential surface of the ribbon-like scraper 36 to the inner circumferential surface of the bottom portion 12a is set in the range of 0 mm to 2 mm.

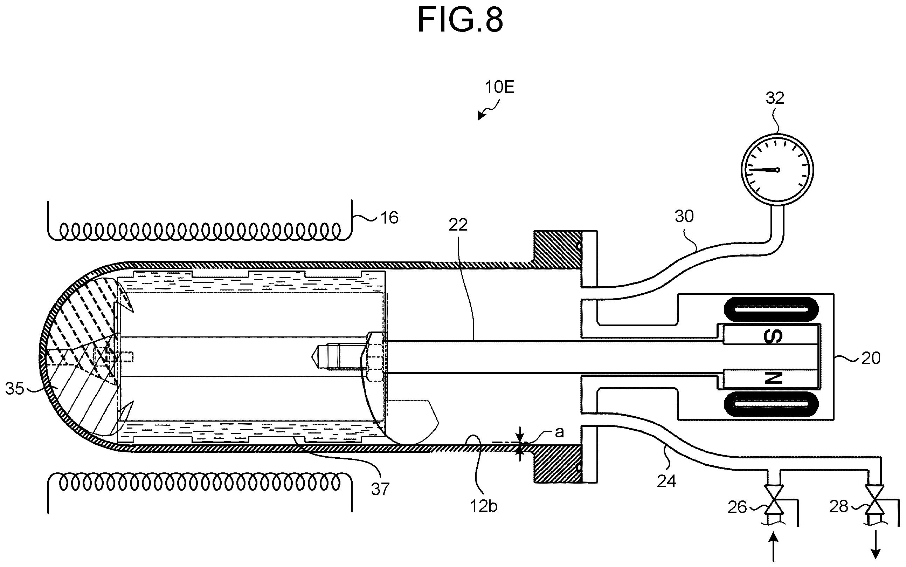

FIG. 8 is a partial sectional view illustrating another example of the tightly sealed vessel used in this embodiment. The difference from the tightly sealed vessel 10A of FIG. 3 resides in that in a tightly sealed vessel 10E, the vessel main body 12 is placed horizontally, and a wide puddle 37 is arranged to the stirring rod 22, which rotates inside of the vessel main body, via the supporting portion thereof. Here, in the tightly sealed vessel 10E of FIG. 8, too, the clearance a between the front end in the side of the inner circumferential surface of the wide puddle 37 and a bottom portion 12b of the inner circumferential surface is set to 2 mm. In the case that the wide puddle 37 like the one in the tightly sealed vessel 10E is used for stirring, when the wide puddle 37 rotates, the raw material is scooped up by the puddle surface. During the time when the raw material is scooped up by this puddle surface, or during the time when the raw material thus scooped up is dropped, the particles of the raw material collide to each other, so that the particle stirring reaction can progress satisfactorily.

<Second Embodiment>

The method for producing the sodium borohydride according to a second embodiment includes the processes from the first step to the third step, which were described in the method for producing sodium borohydride according to the first embodiment. The steps that are the same as those of the first embodiment will be omitted; only the contents that are different will be described.

In the method for producing sodium borohydride according to the second embodiment, at the first step, an alkali metal hydroxide or an alkali metal oxide is further charged into the tightly sealed vessel. Then, at the second step, in the tightly sealed vessel filled with a hydrogen gas, the obtained mixture including sodium borate powder, aluminum powder, and an alkali metal hydroxide is caused to undergo the reaction dehydration at 490°C or higher and 560°C or lower. Alternatively, after dehydration by evacuation with heating, at the third step, in the tightly sealed vessel filled with a hydrogen gas, sodium metaborate powder, aluminum powder, and an alkali metal oxide are mixed, and then, the resulting mixture is caused to react at 490°C or higher and 560°C or lower.

Illustrative examples of the metal hydroxide having an alkali property include sodium hydroxide (NaOH), potassium hydroxide (KOH), and lithium hydroxide (LiOH).

Illustrative examples of the metal oxide having an alkali property include sodium oxide ($Na_2O$), lithium oxide ($Li_2O$), sodium aluminum dioxide ($NaAlO_2$), calcium oxide (CaO), and strontium oxide (SrO). Calcium oxide is added in

order to increase an alkalinity.

When sodium hydroxide (NaOH) is used as the metal hydroxide having an alkali property, as illustrated by the following reaction formula (3), the sodium hydroxide consumes aluminum, and with this, the hydrogen is supplied into the tightly sealed vessel. Therefore, it is preferable to increase the addition amount of aluminum corresponding to the loss of aluminum by this consumption.

$$6NaOH + 2Al \rightarrow 2NaAlO_2 + 2Na_2O + 3H_2 \qquad (3)$$

[Test Examples and Comparative Examples]

Hereinafter, this embodiment will be explained in more detail by Test Examples that demonstrate the advantageous effects of this embodiment; but this embodiment is not limited to these.

In the description below, in Test Example 1 to Test Example 11, Test Example 13 to Test Example 26, and Comparative Examples 1, 3, 4, 7, and 8 to 11, the sodium metaborate ($NaBO_2$) powder was used as the sodium borate, and a fluoride was added with it. In Test Example 12 and Comparative Example 2, sodium metaborate ($NaBO_2$) and borax (sodium tetraborate: $Na_2B_4O_7$) were concurrently used as the sodium borate. In Comparative Examples 5 and 6, sodium diborate ($Na_4B_2O_5$) was used as the sodium borate. As the fluoride, sodium fluoride (NaF) was used, but in Test Example 10, as the fluoride, sodium hexafluoroaluminate ($Na_3AlF_6$) was used, and in Test Example 11, as the fluoride, aluminum fluoride ($AlF_3$) was used. In Test Example 18 to Test Example 23 and Comparative Example 8 to Comparative Example 10, sodium hydroxide was added together with the fluoride as the additive.

[Test Example 1]

(a) First Step

In Test Example 1, sodium metaborate powder is used as the borate raw material.

After the sodium metaborate ($NaBO_2$) was crushed, this was sieved with a sieve having the opening of 100 $\mu$m; then, 5.82 g of this powder, 3.82 g of aluminum (Al: average particle diameter of 30 $\mu$m) powder, and 0.72 g of sodium fluoride (NaF) were mixed, then, at normal temperature, the resulting mixture was charged into the tightly sealed vessel 10A equipped with the pin-like stirrer 22A, as illustrated in FIG. 3. Next, the inside of the tightly sealed vessel was connected to a vacuum pump. Here, the clearance a with the side of the inner circumferential surface 12b of the vessel main body 12 was set to 0 mm.

(b) Second Step

In the water removal method from the raw materials, the inside of the tightly sealed vessel was connected to a vacuum pump and heated at 520°C. The time from when the temperature reached 500°C to the third step was 0.4 hours.

(c) Third Step

After the inside of the tightly sealed vessel was filled with a hydrogen gas to the pressure of 0.74 MPa, the stirring means in the tightly sealed vessel was rotated to stir with the stirring rotation speed of 4.87 cm/s in terms of the circumferential velocity (30 rpm) for 17.9 hours with keeping the heating temperature at 520°C. The stirring at the third step was stopped when the stirring time reached 20 hours, or as a rough indication at the time when the reaction rate calculated from the pressure dropping speed inside of the tightly sealed vessel reached less than 0.5%/Hr; then, the mixture was cooled. At this step, the maximum pressure of the hydrogen gas was 0.76 MPa, the minimum pressure was 0.69 MPa, and the pressure at the end of this step was 0.70 MPa. In the way as described above, the sodium borohydride (SBH) was obtained.

After completion of the third step, the reaction yield was calculated from the consumed hydrogen gas volume (mole amount) calculated from the standard volume of the introduced hydrogen gas, and the average temperature and volume of the inside of the vessel, and the hydrogen gas pressure. As a result, the reaction yield (SBH yield) was 93.0%. The reaction yield by the iodine titration method was 89.7%.

The Na/B (mole ratio) of the Test Example 1 is 1.19. The height ratio of Test Example 1 was 100%.

The content of the sodium borohydride in the reaction product obtained by the iodine titration method as described below was almost as same as above (89%). The formation yield of the sodium borohydride obtained by the titration method is lower as compared with the formation yield that is calculated from the decrease of the hydrogen gas; this difference is caused due to coexistence of the sodium hydride as the hydride. When the sodium hydride is diffused or meets

with boric acid by stirring, this can be converted to the sodium borohydride, so that the reaction yield calculated from the consumed hydrogen amount was used without correction. Unless otherwise specifically mentioned, the "reaction yield" described in this embodiment is not the reaction yield obtained by the iodine titration method but the reaction yield obtained by calculation from the hydrogen consumption (SBH yield).

- Iodine Titration Method -

(1) Into a weighing vial, 50 mg of the sample (reaction product) was weighed to the digit of 0.1 mg.
(2) The sample weighed at (1) was transferred to a 200-ml Erlenmeyer flask equipped with a stopper. To this Erlenmeyer flask equipped with a stopper, 40 ml of a 20 g/L NaOH solution was added; then, the resulting mixture was warmed in a water bath to completely decompose the unreacted aluminum powder.
(3) After the decomposed product obtained at (2) was cooled to room temperature, 20.0 ml of a 0.05 mol/L iodine solution was added thereto by using a volumetric pipette; then, the flask was stoppered and allowed to stand in a dark place for 15 minutes.
(4) To the solution thus obtained at (3), 3 ml of hydrochloric acid was added; after thoroughly mixed by shaking, this solution was titrated by a 0.1 mol/L sodium thiosulfate solution.
(5) Termination of the titration was determined when the purple color of iodine turned to colorless.
(6) The blank test was conducted without the sample; then, the content of the sodium borohydride was obtained by calculation. The formula that was used to calculate the content was as follows. (Calculation formula to obtain the content of sodium borohydride)

$NaBH_4$ (% by mass) = $\{(A - B) \times 0.1 \times f \times 37.83/8\}/C \times 100$

The variables and constants in the above formula are as follows:

A: Titration value of the 0.1 mol/L sodium thiosulfate solution in the blank test (ml);
B: Titration value of the 0.1 mol/L sodium thiosulfate solution in the sample solution (ml);
f: Factor of the 0.1 mol/L sodium thiosulfate solution;
C: Amount of the weighed sample (mg);
37.83: Molecular weight of the sodium borohydride (g/mol); and
8: Normality of the 1 mol/L sodium borohydride solution (N).

[Test Example 2]

Sodium borohydride (SBH) was obtained by the same procedure as Test Example 1, except that the clearance a with the side of the inner circumferential surface 12b of the vessel main body 12 in Test Example 1 was set to 2 mm. As a result, the reaction yield (SBH yield) was 92.9%. The Na/B (mole ratio) in Test Example 2 is 1.19. The height ratio in Test Example 2 was 89%.

[Test Example 3]

Sodium borohydride (SBH) was obtained by the same procedure as Test Example 1, except that the clearance a with the side of the inner circumferential surface 12b of the vessel main body 12 in Test Example 1 was set to 4 mm. As a result, the reaction yield (SBH yield) was 93.2%. The height ratio in Test Example 3 was 77%.

[Test Example 4]

Sodium borohydride (SBH) was obtained by the same procedure as Test Example 1, except that in place of the tightly sealed vessel 10A illustrated in FIG. 3 of Example 1, the tightly sealed vessel 10C having the J-type stirring portion 22B illustrated in FIG. 5 was used with the clearance (a) of 1 mm or less (part of the stirring portion contacted to the bottom's inner circumferential surface), and the heating temperature at the third step was changed to 518°C, and the stirring time was changed to 20.5 hours. As a result, the reaction yield (SBH yield) was 95.1%. The height ratio in Test Example 4 was 100%.

[Test Example 5]

Sodium borohydride (SBH) was obtained by the same procedure as Test Example 1, except that in place of the tightly sealed vessel 10A illustrated in FIG. 3 of Example 1, the tightly sealed vessel 10E having the wide puddle (WP) 37 illustrated in FIG. 8 was used, and after 17.46 g of sodium metaborate ($NaBO_2$), 11.45 g of the aluminum (Al: average particle diameter of 30 μm) powder, and 2.17 g of sodium fluoride (NaF) were mixed, the resulting mixture was charged into the tightly sealed vessel 10E, and the heating temperature at the third step was changed to 517°C, and the stirring time was changed to 13 hours. As a result, the reaction yield (SBH yield) was 94.1%. The height ratio in Test Example 5 was 87%. In this Example, the clearance a with the side of the inner circumferential surface 12b of the vessel main body 12 was set to 2 mm.

[Test Example 6]

Sodium borohydride (SBH) was obtained by the same procedure as Test Example 1, except that in Test Example 5, after 1.08 g of sodium fluoride (NaF), the amount of which was half the amount of Test Example 5, was mixed, the heating temperature at the third step was changed to 510°C, and the stirring time was changed to 23.4 hours. As a result, the reaction yield (SBH yield) was 90.4%. The Na/B (mole ratio) in Test Example 6 is 1.10. The height ratio in Test Example 5 was 87%. In this Example, the clearance a with the side of the inner circumferential surface 12b of the vessel main body 12 was set to 2 mm.

[Test Example 7]

Sodium borohydride (SBH) was obtained by the same procedure as Test Example 1, except that at the third step in Test Example 5, the heating temperature was changed to 549°C, and the stirring time was changed to 23.3 hours. The Na/B (mole ratio) in Test Example 3 is 1.19. As a result, the reaction yield (SBH yield) was 81.7%. The height ratio in Test Example 7 was 87%. In this Example, the clearance a with the side of the inner circumferential surface 12b of the vessel main body 12 was set to 2 mm.

[Test Example 8]

Sodium borohydride (SBH) was obtained by the same procedure as Test Example 5, except that in Test Example 5, the particle diameter of aluminum (Al) was changed to 5 μm, the heating temperature was changed to 510°C, and the stirring time was changed to 6.5 hours. As a result, the reaction yield (SBH yield) was 75.6%. The height ratio in Test Example 8 was 87%. In this Example, the clearance a with the side of the inner circumferential surface 12b of the vessel main body 12 was set to 2 mm.

[Test Example 9]

Sodium borohydride (SBH) was obtained by the same procedure as Test Example 6, except that in Test Example 6, at the third step, the stirring was carried out for 16.9 hours with the stirring rotation speed of 6 rpm (circumferential velocity of 1.54 cm/s). The Na/B (mole ratio) in Test Example 9 is 1.19. As a result, the reaction yield (SBH yield) was 86.6%. The height ratio in Test Example 9 was 87%. In this Example, the clearance a with the side of the inner circumferential surface 12b of the vessel main body 12 was set to 2 mm.

[Test Example 10]

Sodium borohydride (SBH) was obtained by the same procedure as Test Example 6, except that in Test Example 6, the additive was changed from sodium fluoride (NaF) to sodium hexafluoroaluminate ($Na_3AlF_6$), and the addition amount thereof was 1.81 g. The Na/B (mole ratio) in Test Example 8 is 1.10. As a result, the reaction yield (SBH yield) was 85.3%. The height ratio in Test Example 10 was 87%. In this Example, the clearance a with the side of the inner circumferential surface 12b of the vessel main body 12 was set to 2 mm.

[Test Example 11]

Sodium borohydride (SBH) was obtained by the same procedure as Test Example 6, except that in Test Example 6, the additive was changed from sodium fluoride (NaF) to aluminum fluoride ($AlF_3$), and the addition amount thereof was changed to 1.44 g. The Na/B (mole ratio) in Test Example 11 is 1.00. As a result, the reaction yield (SBH yield) was 73.4%. The height ratio in Test Example 11 was 87%. In this Example, the clearance a with the side of the inner circumferential

surface 12b of the vessel main body 12 was set to 2 mm.

[Test Example 12]

Sodium borohydride (SBH) was obtained by the same procedure as Test Example 6, except that in Test Example 5, 6.98 g of sodium metaborate ($NaBO_2$) and 8.01 g of borax were concurrently used as the borate raw material, and the heating temperature was changed to 510°C. The Na/B (mole ratio) in Test Example 12 is 0.89. As a result, the reaction yield (SBH yield) was 56.0%. The height ratio in Test Example 12 was 87%. In this Example, the clearance a with the side of the inner circumferential surface 12b of the vessel main body 12 was set to 2 mm.

[Test Example 13]

Sodium borohydride (SBH) was obtained by the same procedure as Test Example 2, except that in Test Example 2, the amount of sodium fluoride (NaF) was changed to 1.08 g. As a result, the reaction yield (SBH yield) was 95.5%. The Na/B (mole ratio) in Test Example 13 is 1.29. The height ratio in Test Example 13 was 89%. In this Example, the clearance a with the side of the inner circumferential surface 12b of the vessel main body 12 was set to 2 mm.

The results of Test Example 1 to Test Example 13 are listed in Table 1.

Table 1

| No. | Raw material [g] | Borate raw material [g] | | Additive [g] | Na/B (mole ratio) | Heating temperature [°C] | Stirrer type (clearance) | Circumferential velocity [cm/s] | Height ratio [%] | Reaction rate (at 10% reaction yield) [%/Hr] | Reaction yield [%] |
|---|---|---|---|---|---|---|---|---|---|---|---|
| | Al | $NaBO_2$ | $Na_2B_4O_7$ | | | | | | | | |
| Test Example 1 | 3.82 | 5.82 | - | NaF:0.72 | 1.19 | 520 | PIN(0mm) | 4.87 | 100 | 93.2 | 93.0 |
| Test Example 2 | 3.82 | 5.82 | - | NaF:0.72 | 1.19 | 520 | PIN(2mm) | 4.87 | 89 | 29.1 | 92.9 |
| Test Example 3 | 3.82 | 5.82 | - | NaF:0.72 | 1.19 | 520 | PIN(4mm) | 4.87 | 77 | 36.5 | 93.2 |
| Test Example 4 | 3.82 | 5.82 | - | NaF:0.72 | 1.19 | 518 | J(0mm) | 7.80 | 100 | 280 | 95.1 |
| Test Example 5 | 11.45 | 17.46 | - | NaF:2.17 | 1.19 | 517 | WP(2mm) | 7.69 | 87 | 191 | 94.1 |
| Test Example 6 | 11.45 | 17.46 | - | NaF:1.08 | 1.10 | 510 | WP(2mm) | 7.69 | 87 | 90 | 90.4 |
| Test Example 7 | 11.45 | 17.46 | - | NaF:2.17 | 1.19 | 549 | WP(2mm) | 7.80 | 87 | 93.7 | 81.7 |
| Test Example 8 | 11.45 | 17.46 | - | NaF:2.17 | 1.19 | 510 | WP(2mm) | 7.69 | 87 | 113.8 | 75.6 |
| Test Example 9 | 11.45 | 17.46 | - | NaF:2.17 | 1.19 | 510 | WP(2mm) | 1.54 | 87 | 126.1 | 86.6 |
| Test Example 10 | 11.45 | 17.46 | - | $Na_3AlF_6$:1.81 | 1.10 | 510 | WP(2mm) | 7.69 | 87 | 59.9 | 85.3 |
| Test Example 11 | 11.45 | 17.46 | - | $AlF_3$:1.44 | 1.00 | 510 | WP(2mm) | 7.69 | 87 | 14.1 | 73.4 |
| Test Example 12 | 11.45 | 6.98 | 8.01 | NaF:2.17 | 0.89 | 510 | WP(2mm) | 7.69 | 87 | 5.5 | 56.0 |
| Test Example 13 | 3.82 | 5.82 | - | NaF:1.08 | 1.29 | 520 | PIN(2mm) | 4.87 | 89 | 94.1 | 95.5 |

As can be seen in Table 1, in Test Example 1 to Test Example 13, due to the particle stirring reaction, the mass transfer of the raw material sodium metaborate ($NaBO_2$), the intermediate products (NaH and $Na_2O$), and the formed product (SBH) took place not only inside of the aluminum (Al) particle but also among the particles contacting to each other, so that the SBH conversion yield was excellent. In addition, when the clearance (a) was set to 4 mm or less, the particle stirring reaction took place effectively, so that the production efficiency of the sodium borohydride (SBH) was excellent.

[Comparative Example 1]

Sodium borohydride (SBH) was obtained by the same procedure as Test Example 1, except that in Test Example 1, at the first step, the tightly sealed vessel 10A illustrated in FIG. 3, having the clearance a of 5 mm, was used, and 17.46 g of sodium metaborate ($NaBO_2$), 11.45 g of aluminum powder, and 0.72 g of sodium fluoride (NaF) were added, and the heating temperature at the third step was changed to 520°C. The Na/B (mole ratio) in Comparative Example 1 is 1.19. As a result, the reaction yield (SBH yield) was 1.6%. The height ratio in Comparative Example 1 was 72%.

[Comparative Example 2]

Sodium borohydride (SBH) was obtained by the same procedure as Test Example 1, except that in Test Example 1, at the first step, ceramic balls (diameter of 5 mm) were put in the tightly sealed vessel 10A illustrated in FIG. 3 with the weight ratio of the stirring medium to the raw materials being 48, and 1.94 g of sodium metaborate ($NaBO_2$), 1.27 g of aluminum powder, and 0.206 g of sodium fluoride (NaF) were added, and at the third step, the heating temperature was changed to 558°C, the circumferential velocity was changed to 78.5 cm/s (300 rpm), and the stirring was carried out for 13.8 hours. The Na/B (mole ratio) in Comparative Example 2 is 1.17. As a result, the reaction rate at the reaction yield of 10% was 90%/Hr, which was good, but the reaction rate at the reaction yield of 50% decreased to 2.1%/Hr, and the final reaction yield (SBH yield) was 71.9%. The height ratio in Comparative Example 2 was 100%.

[Comparative Example 3]

Sodium borohydride (SBH) was obtained by the same procedure as Test Example 1, except that in Test Example 1, at the first step, ceramic balls (diameter of 5 mm) were put in the tightly sealed vessel 10A illustrated in FIG. 3 with the weight ratio of the stirring medium to the raw materials being 48, and 1.95 g of sodium metaborate ($NaBO_2$) and 1.12 g of aluminum powder were added, and at the third step, the heating temperature was changed to 520°C and the circumferential velocity was changed to 301 cm/s (1150 rpm). The Na/B (mole ratio) in Comparative Example 3 is 1.00. The results showed that the time lag of 0.33 hours was the shortest, but the reaction yield (SBH yield) was 21.9%. The height ratio in Comparative Example 3 was 100%.

[Comparative Example 4]

Sodium borohydride (SBH) was obtained by the same procedure as Test Example 5, except that in Test Example 5, the particle diameter of the aluminum (Al) was changed to 90 $\mu$m, and the heating temperature was changed to 510°C. As a result, the reaction yield (SBH yield) was 37.8%. The height ratio in Comparative Example 4 was 87%. In this Example, the clearance a with the side of the inner circumferential surface 12b of the vessel main body 12 was set to 2 mm.

[Comparative Example 5]

Sodium borohydride (SBH) was obtained by the same procedure as Test Example 1, except that in Test Example 5, at the first step, the tightly sealed vessel 10C having a plurality of multi-blade (MB) scrapers 35 illustrated in FIG. 6 was used, and 5.88 g of sodium diborate ($Na_4B_2O_5$), 2.555 g of aluminum powder, and 1.65 g of sodium fluoride (NaF) were added, and at the third step, the heating temperature was changed to 530°C and the circumferential velocity was changed to 78.5 cm/s (300 rpm). The Na/B (mole ratio) in Comparative Example 5 is 2.65. As a result, the reaction rate at the reaction yield of 10% was 12.3%/Hr, and the reaction yield (SBH yield) was 72.6%. The height ratio in Comparative Example 5 was 89%. In this Example, the clearance a with the side of the inner circumferential surface 12b of the vessel main body 12 was set to 2 mm.

[Comparative Example 6]

Sodium borohydride (SBH) was obtained by the same procedure as Test Example 1, except that in Test Example 5, at the first step, the tightly sealed vessel 10C illustrated in FIG. 6 was used, and 5.88 g of sodium diborate ($Na_4B_2O_5$), 2.54 g of aluminum powder, and 0.22 g of sodium fluoride (NaF) were added, and that at the third step, the heating

temperature was changed to 530°C and the circumferential velocity was changed to 78.5 cm/s (300 rpm). The Na/B (mole ratio) in Comparative Example 6 is 2.09. As a result, the reaction rate at the reaction yield of 10% was 13.2%/Hr, and the reaction yield (SBH yield) was 73.2%. The height ratio in Comparative Example 6 was 89%. In this Example, the clearance a with the side of the inner circumferential surface 12b of the vessel main body 12 was set to 2 mm.

The results of Comparative Example 1 to Comparative Example 6 are listed in Table 2.

Table 2

| No. | Raw material [g] | Borate raw material [g] | | Additive [g] | Na/B (mole ratio) | Heating temperature [°C] | Stirrer type (clearance) | Circumferential velocity [cm/s] | Height ratio [%] | Reaction rate (at 10% reaction yield) [%/Hr] | Reaction yield [%] |
|---|---|---|---|---|---|---|---|---|---|---|---|
| | Al | $NaBO_2$ | $Na_2B_4O_7$ | | | | | | | | |
| Comparative Example 1 | 11.45 | 17.46 | - | NaF:0.72 | 1.19 | 520 | PIN(5mm) | 4.87 | 72 | - | 1.6 |
| Comparative Example 2 | 1.27 | 1.94 | - | NaF:0.206 | 1.17 | 557 | PIN* | 78.5 | 100 | 90.2 | 71.9 |
| Comparative Example 3 | 1.12 | 1.95 | - | - | 1.00 | 520 | PIN* | 301 | 100 | 99.6 | 21.9 |
| Comparative Example 4 | 11.45 | 17.46 | - | NaF:2.17 | 1.19 | 510 | WP(2mm) | 7.69 | 87 | 17 | 37.8 |
| Comparative Example 5 | 2.55 | - | 5.88 | NaF:1.65 | 2.65 | 530 | MB(2mm) | 78.5 | 89 | 12.3 | 72.6 |
| Comparative Example 6 | 2.54 | - | 5.88 | NaF:0.22 | 2.09 | 530 | MB(2mm) | 78.5 | 89 | 13.2 | 73.2 |

*with balls

In Comparative Example 1, the clearance (a) was 5 mm or more, and the height ratio was 72%. Accordingly, the particle stirring reaction like Test Examples 1 to 4, in which the height ratio was 75% or more, did not take place smoothly, so that the product could not be obtained.

In Comparative Example 2, ceramic balls were used as the crushing medium in the tightly sealed vessel for production of the sodium borohydride thereby stirring softly, so that a reaction similar to the particle stirring reaction occurred in the initial period, but the ceramic balls destroyed the product, and the product continued to be crimped in the tightly sealed vessel, thereby forming a crimp layer consisting of the products, so that the diffusion reaction became dominant. As a result, the reaction rate and the reaction yield of the sodium borohydride (SBH) decreased. In Comparison 3, the aluminum particles were deformed because of the high circumferential velocity resulting in the rolling milling; thus, the time lag became so short as 0.33 hours, but the reaction rate promptly decreased. Also, because sodium fluoride (NaF) was not added, the final reaction yield of the sodium borohydride (SBH) was significantly decreased.

In Comparative Example 4, for the production of the sodium borohydride, the aluminum (Al) particle having the particle diameter of 90 μm was used. Therefore, the reaction surface area was decreased thereby resulting in the significant decrease in the reaction rate of the sodium borohydride (SBH), so that the reaction rate at the reaction yield of 10% was so low as 17%/Hr, and the reaction rate at the end, i.e., at 22 hours after the start of the stirring was so low as 0.7%/Hr. The reaction yield after completion of the reaction and the reaction yield by the iodine titration were significantly so low as 37.8% and 37.5%, respectively.

In Comparative Example 5 and Comparative Example 6, because the Na/B ratio is made 2 or more by using sodium fluoride and sodium diborate as the sodium borate, the oxidized film of aluminum on the surface of the aluminum (Al) particle becomes the sodium aluminum dioxide ($NaAlO_2$) layer. The sodium aluminum dioxide ($NaAlO_2$) having a high Na/B ratio of 1.5 or more cannot become the iota-alumina even when the fluoride is present; thus, this remains in the state of the sodium aluminum dioxide ($NaAlO_2$), and a part thereof changes to $xNa_2O \cdot Al_2O_3$, which has a higher ratio of sodium oxide than the iota-alumina, and to $Na_2O$. When the Na/B ratio in the raw materials is high, the product contains a large amount of free sodium oxide ($Na_2O$); in addition, the formed sodium borohydride (SBH), sodium oxide ($Na_2O$), and sodium hydride (NaH) form a molten body of them, resulting in a sherbet-like state immediately after start of the reaction. As a result, the reaction rate at 10% of the reaction yield decreased because the mass transfer took place by diffusion in this dense sherbet-like solid-liquid state.

In Comparative Example 5, the reaction rate at 10% of the reaction yield was 12.3%/Hr, and the final reaction yield was 72.6%. In Comparative Example 6, the reaction rate at 10% of the reaction yield was 13.2%/Hr, and the final reaction yield was 73.2%. The final reaction yields in Comparative Examples 5 and 6 were both lower than the final reaction yield of 94.1% in Test Example 5 in which the Na/B ratio was 1.19.

FIG. 16 is the graph illustrating the relationship between the height ratio and the reaction passage time.

In FIG. 16, symbol I indicates the result with the height ratio of 100% (a = 0 mm), symbol II with the height ratio of 89% (a = 2 mm), symbol III with the height ratio of 77% (a = 4 mm), and symbol IV with the height ratio of 72% (a = 5 mm). As can be seen in FIG. 16, when the stirring height ratio was 75% or more, the particle stirring reaction started, but when the height ratio was 72%, which is 75% or less, the reaction did not start. As a result, when the height ratio was 100% (a = 0 mm), the reaction rate and the reaction yield were the highest. Accordingly, when the height ratio was 75% or more, the production efficiency of the sodium borohydride (SBH) was excellent.

[Test Examples 14 to 17, and Comparative Example 7]

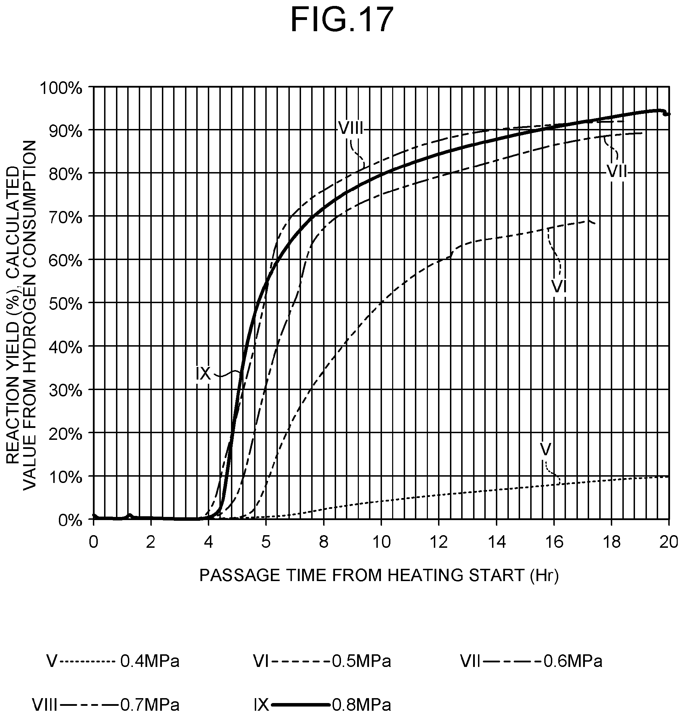

At the third step in Test Example 2, the hydrogen pressure was set so as to be in the range of 0.4 MPa to 0.8 MPa; and then, the same procedure as Test Example 1 was followed to obtain the sodium borohydride (SBH). As a result, the reaction yield (SBH yield) was 68.1% when the hydrogen pressure was 0.5 MPa in Test Example 14; 90.0% when the hydrogen pressure was 0.6 MPa in Test Example 15; 92.9% when the hydrogen pressure was 0.7 MPa in Test Example 16; and 95.5% when the hydrogen pressure was 0.8 MPa in Test Example 17; and thus, all of them were excellent. On the other hand, when the hydrogen pressure was 0.4 MPa in Comparative Example 7, the reaction yield (SBH yield) was 20.4%. These results of Test Example 2, Test Example 14 to Test Example 17, and Comparative Example 7 are listed in Table 3 and in FIG. 17. In these Examples, the clearance a with the side of the inner circumferential surface 12b of the vessel main body 12 was set to 2 mm.

Table 3

| No. | Raw material [g] | Borate raw material [g] | Additive [g] | Na/B (mole ratio) | Heating temperature [°C] | Hydrogen pressure [MPa] | Circumferential velocity [cm/s] | Height ratio [%] | Reaction rate (at 10% reaction yield) [%/Hr] | Reaction yield [%] |
|---|---|---|---|---|---|---|---|---|---|---|
| | Al | $NaBO_2$ | | | | | | | | |
| Test Example 14 | 3.82 | 5.82 | NaF: 0.72 | 1.19 | 520 | 0.5 | 4.87 | 89 | 16.7 | 68.1 |
| Test Example 15 | 3.82 | 5.82 | NaF: 0.72 | 1.19 | 520 | 0.6 | 4.87 | 89 | 21.6 | 900 |
| Test Example 16 | 3.82 | 5.82 | NaF: 0.72 | 1.19 | 520 | 0.7 | 4.87 | 89 | 29.1 | 92.9 |
| Test Example 17 | 3.82 | 5.82 | NaF: 0.72 | 1.19 | 520 | 0.8 | 4.87 | 89 | 46.3 | 95.5 |
| Comparative Example 7 | 3.82 | 5.82 | NaF: 2.17 | 1.19 | 520 | 0.4 | 4.87 | 89 | 0.4 | 20.4 |

FIG. 17 is the graph illustrating the relationship between the reaction yield (SBH yield) and the reaction passage time. In FIG. 17, symbols V, VI, VII, VIII, and IX indicate the results at the hydrogen pressures of 0.4 MPa, 0.5 MPa, 0.6 MPa, 0.7 MPa, and 0.8, respectively. As can be seen in FIG. 17, when the hydrogen pressures were 0.5 MPa or more, the reaction yields (SBH yield) of the sodium borohydride (SBH) were 60% or more; and thus, the reaction yields were excellent. On the other hand, when the hydrogen pressure was 0.4 MPa, the reaction yield (SBH yield) of the sodium borohydride (SBH) was 10.0%. When the hydrogen pressure decreases, the hydrogen gas is stabilized due to the chemical equilibrium, so that the stability of the hydride decreases. It was found that when the hydrogen pressure was 0.4 MPa, the production amounts of the sodium hydride and of the sodium borohydride (SBH) were small, so that the particles were difficult to attach and adhere to each other, so that it was difficult for the portion where the stirring pin could not reach to be stirred, resulting in a partial reaction; and thus, the reaction yield decreased.

As a result, it was found that the necessary hydrogen pressure is at least 0.5 MPa or more. Here, the reaction rate increased from the inflection point in the reaction yield of 40% to 60% in the graph of the Test Examples with the hydrogen pressure of 0.5 MPa to 0.7 MPa, suggesting that the stirring reaction changed from the stirring of particles around the pin-like stirrer 22A to the stirring of the whole body that is entwined like a bread dough.

When the hydrogen pressure was 0.8 MPa, there is a possibility that the initial reaction rate was too fast to recognize the inflection point, or this change had already occurred in an early stage, or the reaction rate was almost as same as the particle stirring state. Furthermore, to obtain the high reaction yield of 90% in the sodium borohydride (SBH) with the addition of the fluoride, the hydrogen pressure of at least 0.6 MPa is necessary. When the hydrogen pressure is made 0.8 MPa, there is an effect to increase the reaction rate at the reaction yield (SBH yield) of around 90% in the sodium borohydride (SBH). It is presumed that this is the effect in which the chemical equilibrium shifts toward the hydride side to increase the production amount of the sodium hydride, and in turn to increase the production amount of the sodium borohydride.

[Test Example 18]

Sodium borohydride (SBH) was obtained by the same procedure as Test Example 5, except that in Test Example 1, at the first step, the tightly sealed vessel 10C having a plurality of the multi-blade (MB) scrapers 35 illustrated in FIG. 6 was used, and 5.82 g of sodium metaborate ($NaBO_2$), 3.18 g of aluminum powder, 0.62 g of sodium fluoride (NaF), and further, 0.1 g of sodium hydroxide powder were added, and at the third step, the heating temperature was changed to 531°C, and the circumferential velocity was changed to 15.7 cm/s (60 rpm). The Na/B (mole ratio) in Test Example 18 is 1.19. The resulting time lag was 1.14 hours. The reaction rate at 10% of the reaction yield was 31.3%/Hr. The reaction was over with the reaction yield (SBH yield) of 62.2% in 5 hours of stirring. The height ratio in Test Example 18 was 89%. In this Example, the clearance a with the side of the inner circumferential surface 12b of the vessel main body 12 was set to 2 mm.

[Test Example 19]

Sodium borohydride (SBH) was obtained by the same procedure as Test Example 17, except that in Test Example 18, at the first step, 5.82 g of sodium metaborate ($NaBO_2$), 3.18 g of aluminum powder, 1.86 g of sodium fluoride (NaF) powder, and further, 0.1 g of sodium hydroxide powder were added, and at the third step, the heating temperature was changed to 530°C. The Na/B (mole ratio) in Test Example 19 is 1.50. As a result, the time lag was 2.33 hours. The reaction rate at 10% of the reaction yield was 47%/Hr. The reaction was over with the reaction yield (SBH yield) of 84.5% in 19.1 hours of stirring. The height ratio in Test Example 19 was 87%. In this Example, the clearance a with the side of the inner circumferential surface 12b of the vessel main body 12 was set to 2 mm.

[Test Example 20]

Sodium borohydride (SBH) was obtained by the same procedure as Test Example 5, except that in Test Example 5, at the first step, the tightly sealed vessel 10D having the ribbon-like scraper 36 illustrated in FIG. 7 was used, and that 17.46 g of sodium metaborate ($NaBO_2$), 11.45 g of aluminum powder, 1.86 g of sodium fluoride (NaF), and further, 0.31 g of sodium hydroxide powder were added, and that at the third step, the heating temperature was changed to 530°C and the circumferential velocity was changed to 15.76 cm/s (60 rpm) with the stirring time of 18.6 hours. The Na/B (mole ratio) in Test Example 20 is 1.20. As a result, the reaction yield (SBH yield) was 91.17%. The height ratio in Test Example 20 was 94%. In this Example, the clearance a with the side of the inner circumferential surface 12b of the vessel main body 12 was set to 2 mm.

[Test Example 21]

Sodium borohydride (SBH) was obtained by the same procedure as Test Example 5, except that in Test Example

5, at the first step, 17.46 g of sodium metaborate ($NaBO_2$), 11.45 g of aluminum powder, 1.86 g of sodium fluoride (NaF), and further, 0.31 g of sodium hydroxide powder were added, and at the third step, the heating temperature was changed to 490°C and the circumferential velocity was changed to 7.8 cm/s (30 rpm). The Na/B (mole ratio) in Test Example 21 is 1.17. As a result, the reaction rate at the reaction yield of 10% was 131%/Hr. The reaction yield (SBH yield) was 86.7%. The height ratio in Test Example 21 was 87%. In this Example, the clearance a with the side of the inner circumferential surface 12b of the vessel main body 12 was set to 2 mm.

[Comparative Example 8]

Sodium borohydride (SBH) was obtained by the same procedure as Test Example 17, except that in Test Example 18, 5.82 g of sodium metaborate ($NaBO_2$), 3.81 g of aluminum powder, 0.62 g of sodium fluoride (NaF), and further, 1.06 g of sodium hydroxide powder were added. The Na/B (mole ratio) in Comparative Example 8 is 1.47. As a result, the reaction rate at the reaction yield of 10% was 8.3%/Hr. The reaction yield (SBH yield) was 32.4%. The height ratio in Comparative Example 8 was 89%. In this Example, the clearance a with the side of the inner circumferential surface 12b of the vessel main body 12 was set to 2 mm.

[Comparative Example 9]

Sodium borohydride (SBH) was obtained by the same procedure as Test Example 19, except that in Test Example 20, 5.82 g of sodium metaborate ($NaBO_2$), 3.81 g of aluminum powder, 0.62 g of sodium fluoride (NaF), and further, 0.29 g of sodium hydroxide powder were added, and that at the third step, the heating temperature was changed to 478°C. The Na/B (mole ratio) in Comparative Example 9 is 1.19. As a result, the reaction rate at the reaction yield of 10% was 2.0%/Hr. The reaction yield (SBH yield) was 19.6%. The height ratio in Comparative Example 9 was 87%. In this Example, the clearance a with the side of the inner circumferential surface 12b of the vessel main body 12 was set to 2 mm.

The results of Test Examples 18 to 20 and Comparative Examples 8 and 9 are listed in Table 4.

Table 4

| No. | Raw material [g] | Borate raw material [g] | Additive [g] | | Na/B (mole ratio) | Heating temperature [°C] | Stirrer type (height ratio) | Circumferential velocity [cm/s] | Stirring time [Hr] | Reaction rate (at 10% reaction yield) [%/Hr] | Reaction yield [%] |
|---|---|---|---|---|---|---|---|---|---|---|---|
| | Al | $NaBO_2$ | NaF | NaOH | | | | | | | |
| Test Example 18 | 3.18 | 5.82 | 0.62 | 0.10 | 1.19 | 531 | MB(89%) | 15.70 | 5.0 | 31.3 | 62.2 |
| Test Example 19 | 3.82 | 5.82 | 1.86 | 0.10 | 1.50 | 530 | MB(89%) | 15.70 | 19.1 | 46.9 | 84.5 |
| Test Example 20 | 11.45 | 17.46 | 1.86 | 0.31 | 1.20 | 530 | Ribbon (94%) | 15.70 | 18.6 | 104.0 | 91.1 |
| Test Example 21 | 11.45 | 17.46 | 1.86 | 0.31 | 1.17 | 490 | WP(87%) | 7.80 | 23.7 | 130.7 | 86.7 |
| Comparative Example 8 | 3.81 | 5.82 | 0.62 | 1.06 | 1.47 | 531 | MB(89%) | 15.70 | 6.1 | 8.3 | 32.4 |
| Comparative Example 9 | 11.45 | 17.46 | 1.86 | 0.31 | 1.20 | 478 | WP(87%) | 7.80 | 13.5 | 2.0 | 19.7 |

As can be seen in Table 4, in Test Examples 18 to 20, sodium hydroxide was added, but the Na/B was made 1.5 or less. When Na/B was so high as 1.50, which is the value in Comparative Example 19, the SBH conversion rate was 84.9%, thus, this is a little bit low; but when Na/B was around 1.2, the excellent conversion rates of 86.7 to 91.1% were obtained. Test Example 18 resulted in a low SBH conversion rate with a short stirring time of 5.0 hours.

On the other hand, in Comparative Example 8, Na/B was 1.47, but much lower reaction yield of 32% was resulted. This is because the addition amount of sodium hydroxide was so large that the sodium borate formed the hydrate thereof under these test conditions, resulting in insufficient water removal, and because the Na/B (molar ratio) was made so high as 1.47 using sodium hydroxide that the mass transfer took place by diffusion in the form of sherbet, resulting in the decrease of the reaction rate and the reaction yield of the sodium borohydride (SBH). Also, when the heating temperature was so low as 478°C like Comparative Example 9, the sodium borohydride is in the solid state and therefore could not serve as the transfer medium for the ions, resulting in only the diffusion in the solid; thus, the reaction rate was significantly decreased, and the reaction yield of the sodium borohydride (SBH) decreased.

When a small amount of sodium hydroxide is added, the surface of aluminum is oxidized by the generated water to newly form a thin oxidized aluminum film, and at the same time, sodium oxide is also formed; then, the oxidized aluminum film changes to the sodium aluminate ($NaAlO_2$), which can be readily changed to the iota-alumina by the fluoride ion. In addition, part of the water becomes hydrogen fluoride that has an effect to form the NaAlF layer on the aluminum surface. However, when a large amount of sodium hydroxide was added as in the case of Comparative Example 8, a thick sodium aluminum dioxide ($NaAlO_2$) layer was formed, and generation of water continued for a long period of time, resulting in formation of fine crystalline hydrate. Because of this, the high oxygen partial pressure is kept in the system to cause competitive reactions, i.e., the oxidation reaction of aluminum and the formation reaction of the hydrides, thereby causing the decreases in the reaction rate as well as the reaction yield.

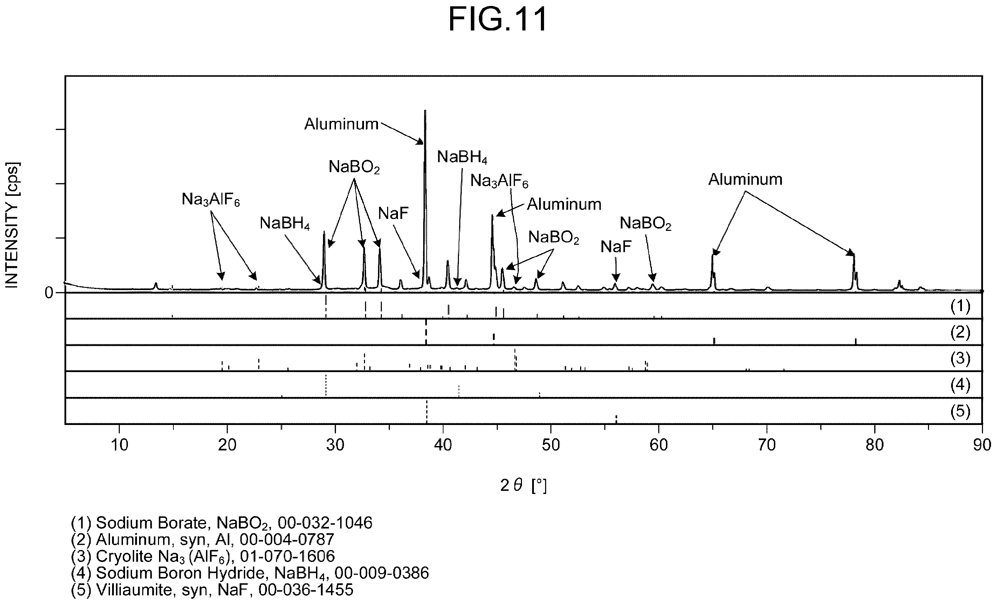

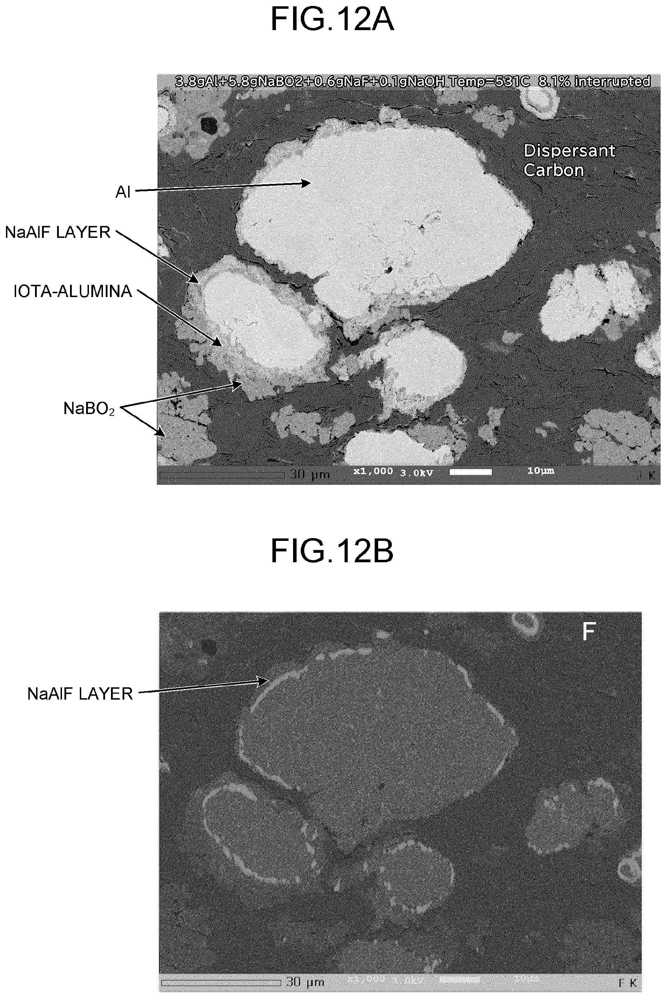

FIG. 11 is the X-ray diffraction analysis chart of the product when the reaction was stopped at the reaction yield of 8.1% immediately after the start of the reaction with the same condition as Test Example 18. FIG. 12A and FIG. 12B are the SEM mapping photographs of the product when the reaction was stopped at the reaction yield of 8.1% immediately after the start of the reaction with the same condition as Test Example 18.

In the early stage of the particle stirring reaction, from the X-ray diffraction analysis in FIG. 11, formation of $Na_3AlF_6$ and the sodium borohydride can be recognized. It was found that in the early stage of the reaction, $Na_3AlF_6$ was formed. From the "F map" in the SEM mapping in FIG. 12B, too, it was found that on the surface of the aluminum particle, a fluoride layer was formed. It is presumed that this is a fluoride layer including $Na_3AlF_6$. This fluoride layer is named as "NaAlF layer".

It is recognized that around the NaAlF layer, there are many portions where the oxides of aluminum and sodium are thickly formed. When the oxides are observed with the enlarged photograph, needle-like crystals are recognized. It is presumed that these needle-like crystals are of the iota-alumina. It is recognized that around the oxides the sodium metaborate is attached.

It is presumed that when the reaction starts around the NaAlF layer to form the iota-alumina layer and SBH, sodium borate attaches to the iota-alumina layer, then sodium oxide and boric acid are supplied from the sodium borate through the iota-alumina layer, whereby the synthesis reaction of the sodium borohydride takes place by aluminum and hydrogen.

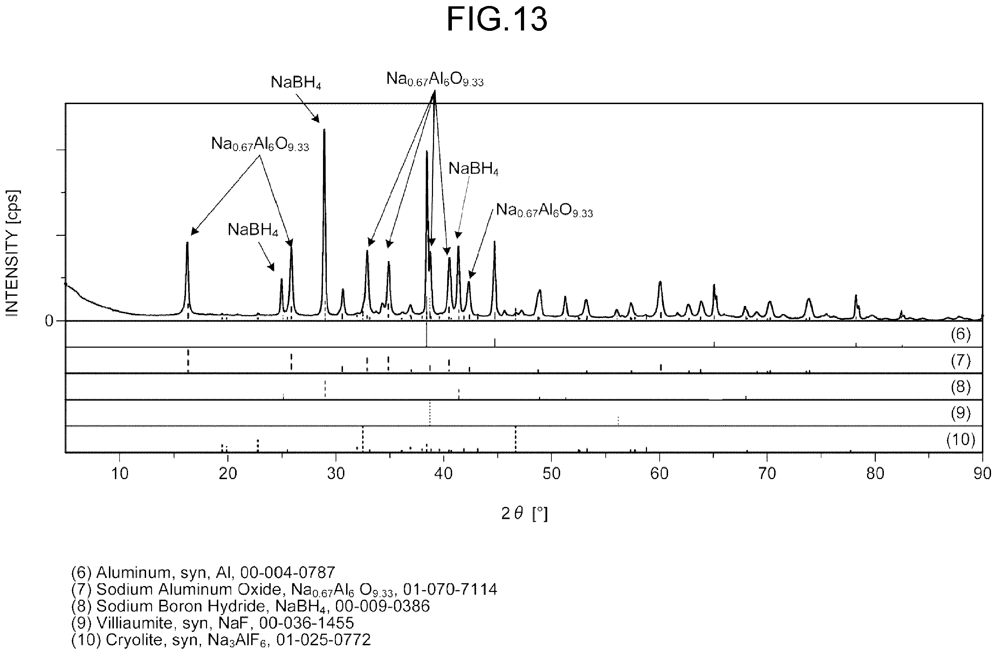

FIG. 13 is the X-ray diffraction analysis chart of the product with the reaction yield of 91.1% in Test Example 20.

From FIG. 13, which analyzes the X-ray diffraction of the product with the reaction yield of 91.1% at which the reaction has been almost over, it was found that the product was mainly composed of the sodium borohydride and the alumina having the composition of $Na_{0.67}\cdot Al_6\cdot O_{9.33}$. It was recognized the presence of the aluminum having been added more than the amount required in the reaction formula, aluminum fluoride, i.e., the additive, and the cryolite ($Na_3AlF_6$) having been observed in the product at the early stage of the reaction. The diffraction profile of $Na_{0.67}\cdot Al_6\cdot O_{9.33}$ is almost identical to that of mullite; and thus, it is presumed that these have the same crystal structure. This crystal is judged to be of the iota-alumina. The fluoride is known as the facilitation catalyst in crystallization of the alumina; so, it is presumed that this has the effect to facilitate crystal growth of the iota-alumina. The fluoride is observed such that a part thereof has, as the cryolite, the same diffraction strength as that in the initial stage of the reaction; and the diffraction strength suggests that most of the fluoride exist as sodium fluoride.

[Test Example 22]

At the second step of Test Example 17, a vacuum pump was connected to the tightly sealed vessel containing the raw materials, and the vessel was heated at 530°C for 0.73 hours to remove water, and then hydrogen gas was introduced to bring the pressure thereof to 0.76 MPa. Sodium borohydride (SBH) was obtained by the same procedure as Test Example 18, except that after conducting the third step at 530°C, the stirring was stopped and the after-baking was conducted at 530°C. The Na/B (mole ratio) in Test Example 22 is 1.21. As a result, the reaction rate calculated from the slope of the reaction yield graph at the reaction yield of 10% was 133%/Hr. The time lag was 1.21 hours. The reaction time

was judged to be 11.3 hours. The reaction yield (SBH yield) was 89.9%. The height ratio in Test Example 22 was 87%. In this Example, the clearance a with the side of the inner circumferential surface 12b of the vessel main body 12 was set to 2 mm.

[Test Example 23]

Sodium borohydride (SBH) was obtained by the same procedure as Test Example 21, except that in Test Example 21, before the third step, as the second step, prebaking was carried out in the tightly sealed vessel at 530°C in a hydrogen atmosphere for 2.4 hours, and then, at the third step the stirring was started with heating at 531°C and continued for 5.5 hours. The Na/B (mole ratio) in Test Example 21 is 1.21. The resulting time lag was 1.5 hours. The reaction rate at the reaction yield of 10% was 144%/Hr. The reaction rate was so fast as 211%/Hr at the reaction yield of 30%, so the stirring time at the third step was shortened to 5.5 hours. The reaction yield (SBH yield) of Test Example 23 was 95.5%. The height ratio in Test Example 23 was 87%. In this Example, the clearance a with the side of the inner circumferential surface 12b of the vessel main body 12 was set to 2 mm.

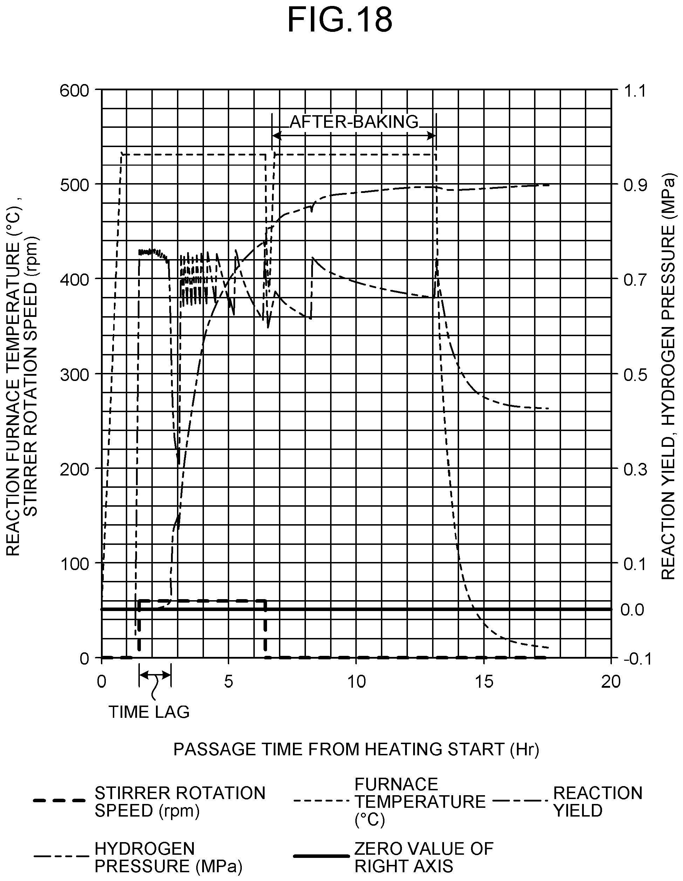

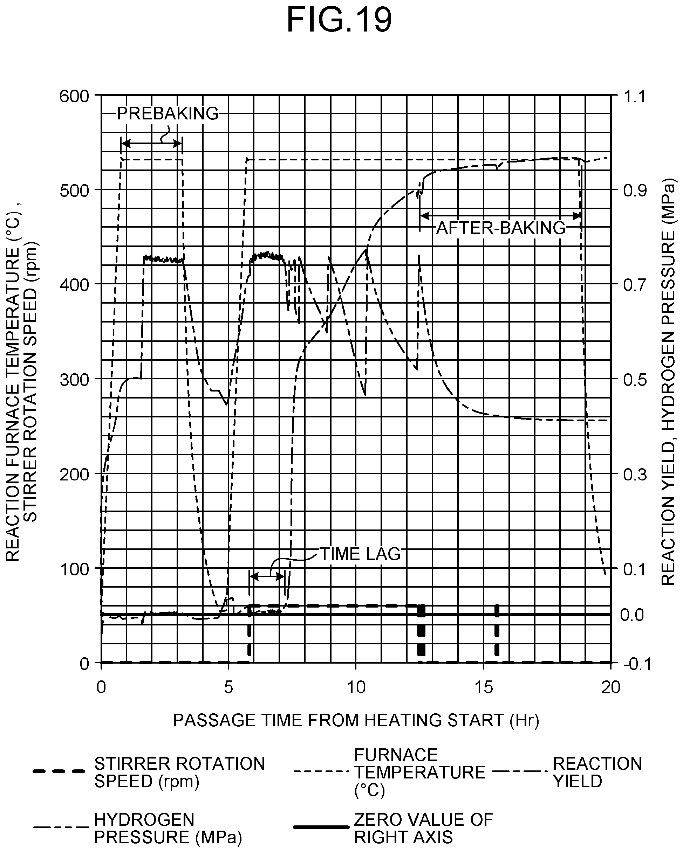

The results of Test Example 22 to Test Example 23 are described in Table 5, FIG. 18, and FIG. 19. FIG. 18 is the graph illustrating the production condition of Test Example 22. FIG. 19 is the graph illustrating the production condition of Test Example 23. In Test Example 22, after the second step at 530°C for 0.73 hours, the hydrogen gas was introduced until the pressure thereof reached 0.76 MPa; then, the stirring was started. After the time lag of 1.2 hours, the hydrogen pressure dropped rapidly with the start of the particle stirring reaction. Once the reaction rate decreased around the reaction yield of 23%, the reaction rate resumed. This indicates that the reaction in the state of particles changed to the reaction with stirring and mixing in the state like a bread dough in which the particles are adhered together. Stirring was stopped at the passage time of 6.4 hours from the start of heating at which time the reaction yield was 78%; then, the reaction was continued with after-baking in a static state. Heating was stopped after approximately 13 hours of the passage time from the start of heating. The reaction continued even in a static state, and the final reaction yield was 89.9%. It was also recognized that the reaction rate increased with increasing the hydrogen gas pressure.

Test Example 23 was the same as Test Example 22, except that instead of the water removal under vacuum, by introducing the hydrogen gas, the second step was conducted for 2.3 hours. Although the time lag slightly increased to 1.5 hours, the reaction rate of the particle stirring reaction at the third step significantly increased at the reaction yield of 25% or higher, and the reaction time at the third step decreased to 5.5 hours versus 11.3 hours. In Test Example 23, during the after-baking the reaction progressed even the reaction yield of 90% or higher.

Table 5

| No. | Raw material [g] | Borate raw material [g] | | Additive [g] | | Na/B (mole ratio) | Prebaking condition (atmosphere :temp[°C]/ time[Hr] | Heating temp [°C] | After-baking condition (temp[°C]/ time[Hr]) | Stirrer type (height ratio) | Hydrogen pressure [MPa] | Stirring time [Hr] | Reaction rate (at 10% reaction yield) [%/Hr] | Reaction yield [%] |
|---|---|---|---|---|---|---|---|---|---|---|---|---|---|---|
| | Al | $NaBO_2$ | $Na_4B_2O_5$ | NaF | NaOH | | | | | | | | | |
| Test Example 22 | 3.82 | 5.82 | - | 0.62 | 0.11 | 1.21 | Vacuum: 530/0.7 | 531 | 530/6.1 | MB(89%) | 0.7 | 11.3 | 133 | 89.9 |
| Test Example 23 | 3.82 | 5.82 | - | 0.62 | 0.11 | 1.20 | $H_2$:530/2.4 | 530 | 530/6.2 | MB(89%) | 0.7 | 6.6 | 144 | 95.5 |
| Test Example 24 | 3.82 | 5.82 | - | 0.72 | - | 1.19 | Vacuum: 510/1.5 | 510 | - | PIN(89%) | 0.8 | 21.4 | 101 | 101.9 |
| Test Example 25 | 3.82 | 5.82 | - | 0.72 | - | 1.19 | Vacuum: 510/2.3 | 510 | - | PIN(89%) | 0.8 | 19.3 | 102 | 103.6 |
| Test Example 26 | 3.82 | 5.82 | - | 0.72 | - | 1.19 | Air:350/1.2 | 510 | - | PIN(89%) | 0.8 | 16.7 | 101 | 102.4 |
| Comparative Example 10 | 12.50 | 17.46 | - | - | 2.00 | 1.19 | Vacuum: 510/4.0 | 530 | - | WP(87%) | 0.7 | 35.0 | 0.4 | 14.1 |
| Comparative Example 11 | 3.82 | 4.69 | 1.66 | - | - | 1.19 | Vacuum: 530/1.3 | 530 | - | MB(89%) | 0.7 | 15.4 | 3.9 | 42.5 |

The results of Test Example 22 indicate that after the third step the reaction still continued even without stirring during the after-baking, thereby achieving the reaction yield of about 90%. Compared to Test Example 20, owing to the prebaking, it was possible to increase the reaction rate thereby achieving the decrease in the stirring time.

From the results of Test Example 23, it can be seen that when the heating was carried out in a hydrogen atmosphere at the second step and the after-baking was carried out after the third step, the reaction rate and the reaction yield (SBH yield) were increased as compared with Test Example 20. It is presumed that this improvement is due to the particle stirring reaction for a long period of time.

As can be seen in FIG. 18 and FIG. 19, in Test Examples 22 and 23, it was recognized that after completion of the reaction at the third step, even without stirring, the reaction yield could be improved by the after-baking. It is presumed that after the particle stirring reaction was fully conducted, the aluminum particles were adhered with the sodium borate particles the amount of which was necessary for the reaction, and thus, the reaction progressed even with the after-baking in a static state.

[Test Example 24]

Sodium borohydride (SBH) was obtained by the same procedure as Test Example 2, except that in Test Example 2, at the second step the water removal was carried out at 510°C in a vacuum atmosphere for 1.5 hours followed by introduction of the hydrogen gas until the pressure of 0.82 MPa, and then, at the third step, the stirring was carried out with heating at 510°C. The Na/B (mole ratio) in Test Example 24 is 1.19. As a result, the time lag was 1.98 hours. The reaction yield (SBH yield) was 101.9%. The height ratio in Test Example 24 was 89%. In this Example, the clearance a with the side of the inner circumferential surface 12b of the vessel main body 12 was set to 2 mm.

[Test Example 25]

Sodium borohydride (SBH) was obtained by the same procedure as Test Example 24, except that in Test Example 24, before the third step, at the second step, the water removal was carried out in a vacuum atmosphere at 510°C for 2.4 hours, and then, at the third step the stirring was started with heating at 510°C. The Na/B (mole ratio) in Test Example 25 is 1.19. As a result, the time lag was 1.1 hours. The reaction yield (SBH yield) was 103.6%. The height ratio in Test Example 25 was 89%. In this Example, the clearance a with the side of the inner circumferential surface 12b of the vessel main body 12 was set to 2 mm.

[Test Example 26]

Sodium borohydride (SBH) was obtained by the same procedure as Test Example 2, except that in Test Example 24, before the third step, at the second step, the heating was carried out in an air atmosphere at 350°C for 1.2 hours, and then, at the third step the stirring was started with heating at 510°C. The Na/B (mole ratio) in Test Example 26 is 1.19. As a result, the time lag was 3.1 hours. The reaction yield (SBH yield) was 102.4%. The height ratio in Test Example 26 was 89%. In this Example, the clearance a with the side of the inner circumferential surface 12b of the vessel main body 12 was set to 2 mm.

[Comparative Example 10]

Sodium borohydride (SBH) was obtained by the same procedure as Test Example 21, except that in Test Example 21, without adding NaF, 17.46 g of sodium metaborate ($NaBO_2$), 12.5 g of aluminum powder, and 2.00 g of sodium hydroxide powder were added, and before the third step, at the second step, prebaking was carried out at 530°C in a vacuum atmosphere for 4.0 hours, and then, at the third step the stirring was started with heating at 520°C. The Na/B (mole ratio) in Comparative Example 10 is 1.19. As a result, the reaction yield (SBH yield) was 14.1%. The height ratio in Comparative Example 10 was 87%. In this Example, the clearance a with the side of the inner circumferential surface 12b of the vessel main body 12 was set to 2 mm.

[Comparative Example 11]

Sodium borohydride (SBH) was obtained by the same procedure as Test Example 21, except that in Example 21, without adding sodium fluoride and sodium hydroxide, 4.69 g of sodium metaborate powder ($NaBO_2$), 1.66 g of sodium diborate powder, and 3.82 g of aluminum powder were added, and before the third step, at the second step, prebaking was carried out at 530°C in a vacuum atmosphere for 1.3 hours, and then, at the third step the stirring was started with heating at 530°C, and at the fourth step the reaction was terminated without the after-baking. The Na/B (mole ratio) in Comparative Example 11 is 1.19. As a result, the reaction rate at the reaction yield of 10% was 3.9%/Hr, and the final reaction yield (SBH

yield) was 42.5%.

The results of Test Example 22 to Test Example 26, and Comparative Example 10 and Comparative Example 11 are listed in Table 5.

In Test Examples 22 and 23, the prebaking in which the heating longer than the time necessary for the water removal (condition of heating at about 500°C for 0.5 hours) and the after-baking in which the reaction is continued in a static state were carried out. Compared to Test Example 20, in which prebaking was not carried out, it was possible to increase the reaction rate and to shorten the stirring time. In the product after the particle stirring reaction, the reaction could be continued by the after-baking without stirring.

From the results of Test Examples 24 to 26, it can be seen that when the prebaking was conducted as the second step, and at the third step, the temperature was set to 510°C and the hydrogen pressure was made higher, the reaction yield (SBH yield) could be improved about 1.1 times as compared with Test Example 2. Prebaking under vacuum was more effective than in an air to shorten the time lag, thereby achieving a shorter total synthesis time. Because the reaction yields exceeded 100% in these tests, the SBH reaction yield was studied by the iodine titration method; the reaction yield in Test Example 24 was 97.3%. The reaction yield was high. It is suggested that this occurred because the hydrogen gas was consumed in the form of sodium hydride. It is presumed that formation of sodium hydride in the high reaction yield region is not due to the reduction reaction of sodium oxide ($Na_2O$) by aluminum and hydrogen, but due to the reduction reaction by formation of a lower aluminum fluoride in the NaAlF layer.

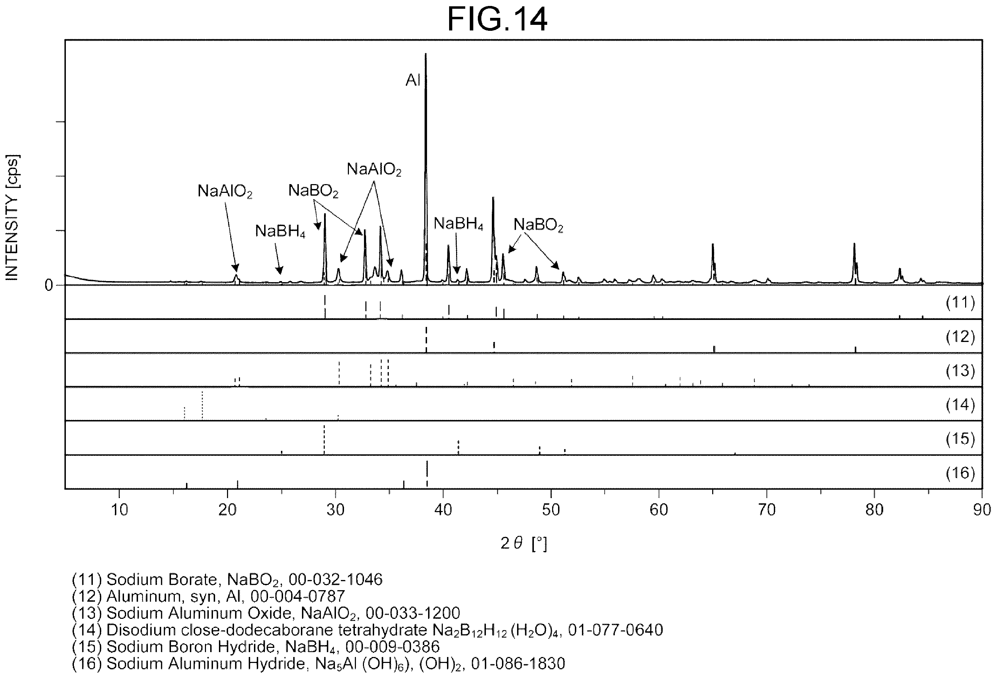

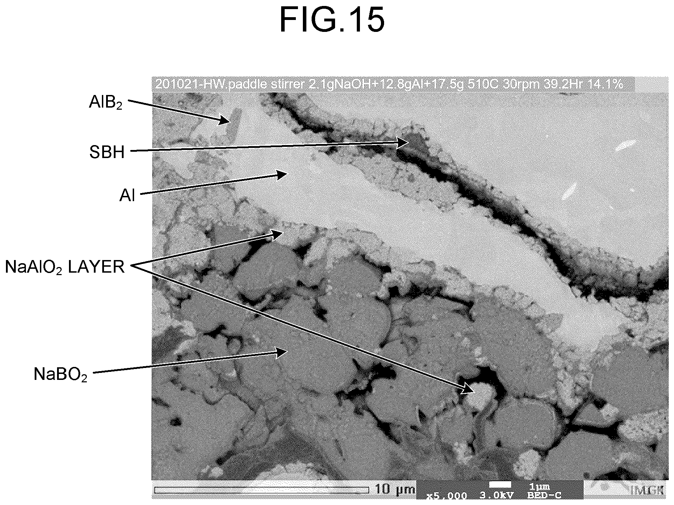

FIG. 14 is the X-ray diffraction analysis chart of the product at the reaction yield of 14.1% in Comparative Example 10 in which NaOH is added. FIG. 15 is the SEM mapping photograph of the product at the reaction yield of 14.1% in Comparative Example 10 in which 2.0 g of NaOH is added. As can be seen in FIG. 14, in the particle stirring method in which stirring was carried out only by the stirrer without using the stirring medium, when the alkalinity was increased only by NaOH without adding NaF at the time of raising the Na/B ratio, the reaction yield was very low as 14.1%. From the X-ray diffraction chart of the product at the reaction yield of 14.1% in which NaOH was added to bring the Na/B to 1.2 with stirring for 35 hours in FIG. 14, sodium borohydride and sodium aluminate ($NaAlO_2$) were detected as the products. Here, the iota-alumina was not detected. The sodium·aluminum hydrate and the sodium·boron hydride hydrate were detected, indicating that the water remained. It is presumed that the low reaction rate and reaction yield were caused because the aluminum surface was oxidized by the water that was supplied from these hydrates. From the SEM mapping composite photograph in FIG. 15 of Comparative Example 10, it can be seen that the surface of the aluminum particle is covered with the sodium·aluminum oxide.

In the aluminum, $AlB_2$ is formed, and in the portion of the oxide in the cracks of the aluminum, a small amount of sodium borohydride is also formed. The sodium metaborate is adhered to the outside of the sodium·aluminum oxide. It is presumed that this sodium·aluminum oxide is very likely the sodium aluminum dioxide ($NaAlO_2$) that is detected by the X-ray diffraction analysis. The surface of this oxide is fine but has some cracks, and a part thereof is present in the particle of the sodium metaborate that is partly torn off. From these states, it is presumed that this oxide is dense, but prone to be broken and torn off when deformed.

From a viewpoint of the ionic conduction, even if the sodium metaborate is adhered, formation of the sodium borohydride is low in the state of being reacted for 35 hours. It is presumed that ions of the sodium aluminum dioxide ($NaAlO_2$) be hardly movable. Accordingly, it is presumed that $Na_2O$ as the intermediate medium cannot move, so that formation of NaH on the aluminum surface is very little. The shortage of $Na_2O$ on the aluminum surface is supported also by the fact that $AlB_2$ is formed in the aluminum.

Reference Signs List

| | |
|---|---|
| 10A to 10E | Tightly sealed vessel |
| 12 | Vessel main body |
| 12a | Bottom portion |
| 14 | Cap |
| 16 | Heater |
| 18 | O-ring |
| 20 | Motor |
| 22 | Stirring rod |
| 22a | Lowest portion |
| 22b | Inner circumferential surface |
| 22A | Stirrer |
| 22B | J-type stirring portion |
| 24 | First pipe |

| | |
|---|---|
| 26 | Hydrogen gas supplying valve |
| 28 | Gas discharging valve |
| 30 | Second pipe |
| 32 | Pressure gauge |
| 35 | Scraper |
| 36 | Ribbon-like scraper |
| 37 | Wide paddle |
| 39 | Raw material |
| 51 | Sodium borates |
| 52 | Aluminum powder |
| 53 | Non-oxidative gas |
| 54 | Fluoride |
| 101 | Aluminum |
| 101a | Surface |
| 101b | Oxidized Al film |
| 101c | Needle-like iota-alumina (0.67Na·6Al·9.330) layer |
| 102 | Sodium metaborate ($NaBO_2$) |
| 103 | Sodium fluoride (NaF) |
| 111 | Sodium borohydride (SBH) |
| 112 | Sodium hydride (NaH) |
| 113 | Sodium oxide ($Na_2O$) |
| 115 | Reaction products layer (sodium borohydride (SBH) and sodium hydride (NaH)) |

**Claims**

**1.** A method for producing sodium borohydride, the method comprising

at a time when a sodium borate having a Na/B mole ratio in the range of more than 0.85 to less than 1.47, an aluminum powder, and a fluoride powder are mixed and caused to react in a tightly sealed vessel filled with a hydrogen gas at a temperature of 490°C or higher and 560°C or lower and a hydrogen pressure of 0.5 MPa or more,
carrying out stirring using a stirrer in the tightly sealed vessel, wherein
a stirring height ratio (X) expressed by a following formula (I) is 75% or more, in which

(a) is a minimum clearance between the stirrer and a lowest part of the tightly sealed vessel in a gravity direction, and
(b) is a raw material charged height when a raw material is charged into the tightly sealed vessel:

$$X = [(b - a)/b] \times 100 \quad \text{Formula (I).}$$

**2.** The method for producing sodium borohydride according to claim 1, wherein the sodium borate is one or more selected from sodium metaborate and sodium tetraborate.

**3.** The method for producing sodium borohydride according to claim 1 or 2, wherein the fluoride is one or more selected from sodium fluoride (NaF), sodium hexafluoroaluminate ($Na_3AlF_6$), potassium fluoride (KF), potassium aluminum fluoride ($KAlF_4$), aluminum fluoride ($AlF_3$), and lithium fluoride (LiF).

**4.** The method for producing sodium borohydride according to any one of claims 1 to 3, wherein a mole ratio of aluminum in the aluminum powder to boron in the sodium borate is 4/3 or more.

**5.** The method for producing sodium borohydride according to any one of claims 1 to 4, wherein

an alkali metal oxide or an alkali earth metal oxide is further added, and
a mole ratio of a total mole amount of an alkali metal and an alkaline earth metal, and an alkali metal and an alkali earth metal that are included in the sodium borate to a mole amount of boron included in the sodium borate is 1.0 or more and 1.4 or less.

6. The method for producing sodium borohydride according to any one of claims 1 to 5, wherein before the stirring, inside of the tightly sealed vessel is heated at 280°C or higher and 560°C or lower.

## Patentansprüche

1. Verfahren zur Herstellung von Natriumborhydrid, wobei das Verfahren umfasst

   zum Zeitpunkt, zu dem Natriumborat mit einem Na/B-Molverhältnis im Bereich von mehr als 0,85 bis weniger als 1,47, ein Aluminiumpulver und ein Fluoridpulver gemischt und in einem dicht verschlossenen Gefäß, das mit einem Wasserstoffgas gefüllt ist, bei einer Temperatur von 490°C oder höher und 560°C oder niedriger und einem Wasserstoffdruck von 0,5 MPa oder mehr zur Reaktion gebracht werden,
   Durchführen eines Rührvorgangs unter Verwendung eines Rührers in dem dicht verschlossenen Gefäß, wobei ein Rührhöhenverhältnis (X), ausgedrückt durch eine folgende Formel (I), 75 % oder mehr beträgt, worin

   (a) ein Mindestabstand zwischen dem Rührer und einem niedrigsten Teil des dicht verschlossenen Gefäßes in Richtung der Schwerkraft ist und
   (b) eine Füllhöhe des Rohmaterials ist, wenn ein Rohmaterial in das dicht verschlossene Gefäß gefüllt ist:

$$X = [(b - a)/b] \times 100 \qquad \text{Formel (I).}$$

2. Verfahren zur Herstellung von Natriumborhydrid gemäß Anspruch 1, wobei das Natriumborat eines oder mehrere, ausgewählt aus Natriummetaborat und Natriumtetraborat, ist.

3. Verfahren zur Herstellung von Natriumborhydrid gemäß Anspruch 1 oder 2, wobei das Fluorid eines oder mehrere, ausgewählt aus Natriumfluorid (NaF), Natriumhexafluoraluminat ($Na_3AlF_6$), Kaliumfluorid (KF), Kaliumaluminiumfluorid ($KalF_4$), Aluminiumfluorid ($AlF_3$) und Lithiumfluorid (LiF), ist.

4. Verfahren zur Herstellung von Natriumborhydrid gemäß einem der Ansprüche 1 bis 3, wobei ein Molverhältnis von Aluminium in dem Aluminiumpulver zu Bor in dem Natriumborat 4/3 oder mehr beträgt.

5. Verfahren zur Herstellung von Natriumborhydrid gemäß einem der Ansprüche 1 bis 4, wobei

   ferner ein Alkalimetalloxid oder ein Erdalkalimetalloxid hinzugefügt wird und
   ein Molverhältnis einer gesamten Molmenge eines Alkalimetalls und eines Erdalkalimetalls und eines Alkalimetalls und eines Erdalkalimetalls, die in dem Natriumborat enthalten sind, zu einer Molmenge von Bor, das in dem Natriumborat enthalten ist, 1,0 oder mehr und 1,4 oder weniger beträgt.

6. Verfahren zur Herstellung von Natriumborhydrid gemäß einem der Ansprüche 1 bis 5, wobei vor dem Rühren das Innere des dicht verschlossenen Gefäßes bei 280°C oder höher und 560°C oder niedriger erwärmt wird.

## Revendications

1. Procédé de production de borohydrure de sodium, le procédé comprenant

   à un moment où un borate de sodium présentant un rapport molaire Na/B dans une plage allant de plus de 0,85 à moins de 1,47, une poudre d'aluminium et une poudre de fluorure sont mélangées et amenées à réagir dans un récipient hermétiquement fermé rempli d'hydrogène gazeux à une température de 490 °C ou plus et de 560 °C ou moins et une pression d'hydrogène de 0,5 MPa ou plus,
   la réalisation d'une agitation en utilisant un agitateur dans le récipient hermétiquement fermé, dans lequel un rapport de hauteur d'agitation (X) exprimé par une Formule (I) suivante est de 75 % ou plus, dans laquelle

   (a) est un jeu minimal entre l'agitateur et une partie la plus basse du récipient hermétiquement fermé dans une direction de gravité, et
   (b) est une hauteur de charge en matière première lorsqu'une matière première est chargée dans le récipient hermétiquement fermé :

$$X = [ (b - a) /b] \times 100 \text{ Formule (I)}.$$

**2.** Procédé de production de borohydrure de sodium selon la revendication 1, dans lequel le borate de sodium est un ou plusieurs sélectionnés parmi le métaborate de sodium et le tétraborate de sodium.

**3.** Procédé de production de borohydrure de sodium selon la revendication 1 ou la revendication 2, dans lequel le fluorure est un ou plusieurs sélectionnés parmi le fluorure de sodium (NaF), l'hexafluoroaluminate de sodium ($Na_3AlF_6$), le fluorure de potassium (KF), le fluoroaluminate de potassium ($KAlF_4$), le fluorure d'aluminium ($AlF_3$) et le fluorure de lithium (LiF).

**4.** Procédé de production de borohydrure de sodium selon l'une quelconque des revendications 1 à 3, dans lequel un rapport molaire de l'aluminium dans la poudre d'aluminium au bore dans le borate de sodium est de 4/3 ou plus.

**5.** Procédé de production de borohydrure de sodium selon l'une quelconque des revendications 1 à 4, dans lequel

un oxyde de métal alcalin ou un oxyde de métal alcalino-terreux est en outre ajouté, et
un rapport molaire d'une quantité molaire totale d'un métal alcalin et d'un métal alcalino-terreux, et d'un métal alcalin et d'un métal alcalino-terreux qui sont inclus dans le borate de sodium à une quantité molaire de bore inclus dans le borate de sodium est de 1,0 ou plus et de 1,4 ou moins.

**6.** Procédé de production de borohydrure de sodium selon l'une quelconque des revendications 1 à 5, dans lequel, avant l'agitation, l'intérieur du récipient hermétiquement fermé est chauffé à 280 °C ou plus et à 560 °C ou moins.

FIG.1
SODIUM BORATE
51
FIRST STEP
S-11
FLUORIDE
54
NON-OXIDATIVE GAS
53
(ROOM TEMPERATURE)
ALUMINUM POWDER
52
SECOND STEP
S-12
H2 INTRO-DUCTION
THIRD STEP
S-13
(490 TO 560°C)
SODIUM BOROHYDRIDE (NaBH4)

# FIG.2A

102
103
NaF
Al
101
NaBO$_2$
102
$H_2$
102
NaBO$_2$
Al
101

# FIG.2B

NaBO$_2$
102
103
$H_2$
102
101c
NaF
102
NaBO$_2$
IOTA-ALUMINA
NaBO$_2$
101b
OXIDIZED
Al FILM
Al
Al
01a
101
101

FIG.2C

102
NaBO₂
103
H₂
102
101c
NaF
111
102
IOTA-ALUMINA
NaBO₂
Na₂O
Al
SBH+NaH
111
113
112
Al
Al
101


FIG.2D

102
115
101c
111
H₂
REACTION PRODUCTS LAYER 115
102
IOTA-ALUMINA
Na₂O
Al
SBH+NaH
113
111
112
Al
101

FIG.2E

115
115
NaBO2
Al
101
H2
102
NaBO2
H2
Al

FIG.2F

111
101c
111
101c
103
NaF
101c

# FIG.3

10A
32
20
28
26
24
30
14
18
12
22
16
39
b
a
22A
12b

FIG.4

10A
32
20
28
26
24
30
14
18
12
22
16
39
a
22A
12b

FIG.5
10B
32
20
28
26
30
24
14
18
12
22
16
A
B
22B
12a
12b
A,B CROSS SECTION

# FIG.6

10C
32
20
Pressure
S
N
30
24
22
12
16
35

FIG.7

10D
32
20
Pressure
S
N
30
24
22
12
16
36

10E
32
20
S
N
28
26
30
24
22
a
12b
16
37
35

FIG.8

# FIG.9

201026HWpaddle1.8gNa3AlF6+17.5gNaBO2+11.5gAl 510C84.9%
$Na_2O$
SBH
IOTA-ALUMINA
SBH
$Na_3AlF_6$
Al
IOTA- ALUMINA
10μm
x2,000
3.0kV
BED-C
SEM
WD 10.0mm

# FIG.10

201008HWpaddle0.3gNaOH+11.5gAl premix240C-mix17.5gNaBO2+1.9gNaF-470C19.6%
$NaBO_2$
IOTA-ALUMINA
SBH
NaAlF LAYER
Al
1μm
x5,000
3.0kV
BED-C
SEM
WD 10.0mm

# FIG.11

INTENSITY [cps]
0
2θ [°]
10
20
30
40
50
60
70
80
90
(1)
(2)
(3)
(4)
(5)
Na3AlF6
NaBH4
Aluminum
NaBO2
NaF
NaBH4
Na3AlF6
Aluminum
NaBO2
NaF
NaBO2
Aluminum


(1) Sodium Borate, $NaBO_2$, 00-032-1046
(2) Aluminum, syn, Al, 00-004-0787
(3) Cryolite $Na_3(AlF_6)$, 01-070-1606
(4) Sodium Boron Hydride, $NaBH_4$, 00-009-0386
(5) Villiaumite, syn, NaF, 00-036-1455

FIG.12A

3.8gAl+5.8gNaBO2+0.6gNaF+0.1gNaOH Temp=531C 8.1% interrupted
Dispersant Carbon
Al
NaAlF LAYER
IOTA-ALUMINA
$NaBO_2$
30 μm
x1,000 3.0kV
10μm

FIG.12B

F
NaAlF LAYER
30 μm

# FIG.13

INTENSITY [cps]
0
2θ [°]
10
20
30
40
50
60
70
80
90
(6)
(7)
(8)
(9)
(10)
NaBH4
Na0.67Al6O9.33
NaBH4
Na0.67Al6O9.33
NaBH4
Na0.67Al6O9.33
(6) Aluminum, syn, Al, 00-004-0787
(7) Sodium Aluminum Oxide, Na0.67Al6 O9.33, 01-070-7114
(8) Sodium Boron Hydride, NaBH4, 00-009-0386
(9) Villiaumite, syn, NaF, 00-036-1455
(10) Cryolite, syn, Na3AlF6, 01-025-0772

FIG.14

Al
NaAlO$_2$
NaBO$_2$
NaAlO$_2$
NaBH$_4$
NaBH$_4$
NaBO$_2$
INTENSITY [cps]
0
(11)
(12)
(13)
(14)
(15)
(16)
10
20
30
40
50
60
70
80
90
2θ [°]
(11) Sodium Borate, NaBO$_2$, 00-032-1046
(12) Aluminum, syn, Al, 00-004-0787
(13) Sodium Aluminum Oxide, NaAlO$_2$, 00-033-1200
(14) Disodium close-dodecaborane tetrahydrate Na$_2$B$_{12}$H$_{12}$(H$_2$O)$_4$, 01-077-0640
(15) Sodium Boron Hydride, NaBH$_4$, 00-009-0386
(16) Sodium Aluminum Hydride, Na$_5$Al (OH)$_6$), (OH)$_2$, 01-086-1830

FIG.15

201021-HW.paddle stirrer 2.1gNaOH+12.8gAl+17.5g 510C 30rpm 39.2Hr 14.1%
$AlB_2$
SBH
Al
$NaAlO_2$ LAYER
$NaBO_2$
10 μm
x5,000 3.0kV BED-C
1μm
IMGK

# FIG.16

100%
90%
80%
70%
60%
50%
40%
30%
20%
10%
0%
REACTION YIELD (%), CALCULATED VALUE FROM HYDROGEN CONSUMPTION
0
2
4
5
8
10
12
14
16
18
20
PASSAGE TIME FROM HEATING START (Hr)
I
II
III
IV

I·········100%(0mm) II-----89%(2mm) III——---77%(4mm) IV———72%(5mm)

# FIG.17

100%
90%
80%
70%
60%
50%
40%
30%
20%
10%
0%
REACTION YIELD (%), CALCULATED VALUE FROM HYDROGEN CONSUMPTION
0
2
4
5
8
10
12
14
16
18
20
PASSAGE TIME FROM HEATING START (Hr)
VIII
VII
VI
IX
V

V 0.4MPa
VI 0.5MPa
VII 0.6MPa
VIII 0.7MPa
IX 0.8MPa

# FIG.18

AFTER-BAKING

TIME LAG

REACTION FURNACE TEMPERATURE (°C), STIRRER ROTATION SPEED (rpm)

REACTION YIELD, HYDROGEN PRESSURE (MPa)

PASSAGE TIME FROM HEATING START (Hr)

STIRRER ROTATION SPEED (rpm)
FURNACE TEMPERATURE (°C)
REACTION YIELD
HYDROGEN PRESSURE (MPa)
ZERO VALUE OF RIGHT AXIS

# FIG.19

600
500
400
300
200
100
0
1.1
0.9
0.7
0.5
0.3
0.1
0.0
-0.1
0
5
10
15
20
PREBAKING
AFTER-BAKING
TIME LAG
REACTION FURNACE TEMPERATURE (°C) , STIRRER ROTATION SPEED (rpm)
REACTION YIELD, HYDROGEN PRESSURE (MPa)
PASSAGE TIME FROM HEATING START (Hr)
STIRRER ROTATION SPEED (rpm)
FURNACE TEMPERATURE (°C)
REACTION YIELD
HYDROGEN PRESSURE (MPa)
ZERO VALUE OF RIGHT AXIS

# FIG.20A

22
3.817gAl 5.819gNaBO2+0.722gNaF 520C 93.2%
22A

# FIG.20B

201217Vpinstirrer(4mm high from bottom) 3.82gAl+5.82gNaBO2+0.72gNaF 520C 93.2%

FIG.20C

201216(105)pin stirrer(4mmhigh from bottom) 3x 3.817gAl 5.819gNaBO2+0.722gNaF 520C 93.2%

FIG.20D

201216(105)pin stirrer(4mmhigh from bottom) 3x 3.817gAl 5.819gNaBO2+0.722gNaF 520C 93.2%
Mitutoyo
MADE IN JAPAN
0 10 20 30 40
0 1 2 3 4 5 6 7 8 9 10

FIG.20E

201217Vpinstirrer(4mm high from bottom)3.82gAl+5.82gNaBO2+0.72gNaF 520C 93.2%

FIG.20F

200225 ribbon stirrer Black aggregated particles x10 NaBO2+NaF+NaOH 530C 91.1%
100µm
x50
3.0kV LED
SEM
WD 10.0mm

# FIG.21A

201210V.pin stirrer(5mm high from bottom) 3.82gAl+5.82gNaBO2+0.72g NaF :520C 1.6%

# FIG.21B

201210 no ball pin stirrer-5mm from bottom 3x 3.817gAl+5.819gNaBO2+0.722g NaF :520C 1.6%

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2809666 B
- JP 2015190403 A
- JP 2019189483 A

### Non-patent literature cited in the description

- **BIN HONG LIU**. Sodium Borohydride Synthesis by Reaction of Na2O Contained Sodium Borate with Al and Hydrogen. *Energy & Fuels*, 2007, vol. 21 (3), 1707-1711